Europäisches Patentamt

European Patent Office

Office européen des brevets

(11) Publication number: **0 451 281 A1**

# EUROPEAN PATENT APPLICATION
## published in accordance with Art. 158(3) EPC

(21) Application number: 90913229.2

(22) Date of filing: 11.09.90

(86) International application number:
PCT/JP90/01159

(87) International publication number:
WO 91/04531 (04.04.91 91/08)

(51) Int. Cl.5: **G06F 12/00**

(30) Priority: 14.09.89 JP 239446/89
14.09.89 JP 239447/89
14.09.89 JP 239451/89
12.10.89 JP 265567/89
12.10.89 JP 265568/89
12.10.89 JP 265569/89

(43) Date of publication of application:
16.10.91 Bulletin 91/42

(84) Designated Contracting States:
DE FR GB

(71) Applicant: FUJITSU LIMITED
1015, Kamikodanaka Nakahara-ku
Kawasaki-shi Kanagawa 211(JP)

(72) Inventor: AOE, Shigeru
5-3-11-702, Yashio
Shinagawa-ku Tokyo 140(JP)
Inventor: KAKEHI, Gen
20-9-101, Edaminami 5-chome Midori-ku
Yokohama-shi Kanagawa 227(JP)
Inventor: RYU, Tadamitsu 1-604 Konandai
Kotohausu
1151-121, Kamigocho Sakae-ku,
Yokohama-shi
Kanagawa 247(JP)

Inventor: ENDO, Mamoru
2-8-1-110, Minamidai
Sagamihara-shi Kanagawa 228(JP)
Inventor: YAMAGATA, Mitsuhiko
6-15, Higashi 1-chome
Kuki-shi Saitama 346(JP)
Inventor: NAKAYAMA, Shuichi
115, Ueki
Kamakura-shi Kanagawa 247(JP)
Inventor: TAKAHARA, Toshio
578-1, Futago
Takatsu-ku, Kawasaki-shi Kanagawa 213(JP)
Inventor: HIRONO, Shingo
3-23-6-403, Nerima
Nerima-ku Tokyo 176(JP)
Inventor: MATSUMOTO, Tohru
1156-1, Nagatsutacho Midori-ku
Yokohama-shi Kanagawa 227(JP)
Inventor: MOGI, Yoshio
102-4, Hiraicho Tochigi-shi
Tochigi 328(JP)

(74) Representative: Lehn, Werner, Dipl.-Ing. et al
Hoffmann, Eitle & Partner Patentanwälte
Arabellastrasse 4
W-8000 München 81(DE)

(54) DATA BASE SYSTEM FOR EACH OF THE FUNCTIONS AND DATA PROCESSING SYSTEM FOR EACH OF THE FUNCTIONS.

(57) A data base system and a data processing system in a data processor that handle multi-media data. The principal object is to provide a system excellent in producibility and flexibility. The data to be processed are abstracted and classified depending upon the functions. Each piece of the data is provided with a unique code indicating a procedure depending upon its attribute, so that the data pieces

are regarded as ports. These codes serve to main-    tain the data base and perform data processing.

## Fig.8

[Field of the invention]

This invention relates to the functional database method and the functional data processing method. The former method is used to functionally manage memory storing multimedia data. The latter method is used to process data according to objects functionally provided. Specifically, this invention relates to:

(1) Functional database method: The database to be processed is functionally constructed according to objects. The data structure most suitable for storing data is provided and a necessary link is established among data groups.

(2) Functional data processing method: In a distributed system, the objects functionally provided are each separated as a functional object. A link is established among objects by message passing to enable remote processing among them.

(3) Functional database method: The amount of data transfer among terminals can be largely reduced when the functional database method is achieved in the distributed system.

(4) Functional data processing method: File management is simplified by enabling objects to be hierarchically constructed. This enables efficient data processing.

(5) Functional database method: Multimedia information can be merged and viewed efficiently.

(6) Functional data processing method: Users can freely construct systems.

[Background of the invention]

From the viewpoint of computer system users, I/O data for I/O devices has an important meaning. However, in the past, such I/O data items were divided into pieces to handle them separately. That is, a specific link was not established among buffers, files, and tables for various definitions. In recent years, a so-called object-oriented architecture database method and a so-called object-oriented architecture data processing method are being used. In these methods, abstracted data and the way it is handled are treated as objects. Message communication between objects enables data to be processed. However, in such object-oriented database systems, objects are not functionally constructed and a specific link is not provided among objects.

For example, assume that image pictures and character text are overlapped and displayed and that voice data are output at the same time. In the conventional method, a processing program must recognize data of different media and access the related data for processing. Assume that fixed data such as format data and variable data which gradually changes are overlapped and displayed. In the conventional method, data is only created, cannot be automatically displayed without a program, and cannot be handled primarily. To solve this problem, a dedicated program is required.

In the conventional method, there are no functional files associated with processing. There is no means to manage and connect the files. The disadvantages of the conventional method is:

(1) Unific definition is impossible for data having various characteristics: The data cannot be grouped into parts.

(2) It is difficult to primarily handle multimedia data, such as code data (ex. character text), dot data (ex. image data), voice data (ex. coded voice data), and picture data (ex. animation).

(3) Fixed and variable data items are not differentiated since they are all handled as changing data items. Thus, specific I/O devices are used and a special procedure is required to connect sensors and actuators to a network.

Various types of distributed systems, such as distributed functions and load distribution, are being used. However, in the conventional data processing method, data and related processing functions exist separately in the terminals. Programs in the terminals recognize data in systems and execute data processing.

In the recent object-oriented architecture data processing method explained above, objects are hierarchically managed as classes and subclasses. When this hierarchy is used in distributed systems, it is usual to independently provide objects having certain functions, for each terminal.

However, in the conventional method, a local terminal can only send data it created, to remote terminals. This is because the function of the whole distributed system is not divided into subfunctions and each terminal must have all functions. Thus, it is hard to organically connect distributed data. When data created in the local or remote terminal is used by other terminals, all data contents must be transferred. The amount of information transfer increases. This results in much time and high costs. In a network, empty or low-cost places are merely connected. In general, real-time data processing by sensors and actuators differs from processing in which communication occurs via a network. The same file must not be used in both processing. The files in each terminal are fixed. If the amount of data exceeds the capacity, the data disappears or a system abnormality occurs.

A distributed database system divides databases to enable the terminals to perform distributed control over them. In this system, when a terminal creates data, it stores and manages the data. It sends part or whole of data to other terminals having no database. In the conventional database method, all data items to be sent are sent to other terminals for each transfer.

Data, such as remote monitoring data, which changes as time elapses must be sent according to data change. In this case, in the above conventional method, data transfer continues without differenciating fixed data items from the data. This increases the amount of data between terminals, resulting in a high data error ratio and high communication costs. When two or more terminals have the same data, if part of basic data is corrected, data of all these terminals having the same data must be corrected. The problem here is that all data items must be transferred for each data correction.

In the conventional data processing method, data is stored in a file and the storage location is managed with an address. An output program specifying the output format is also stored in the file. When file data is output to external devices, the output program is first loaded into main memory. Then, required data is fetched by specifying an address and is output according to the specified output format.

However, in such a conventional method, file management becomes complicated when associated data is output to different external device media or when data, such as voice and animation data items, is continuously output page-by-page.

In the conventional database method, when multimedia I/O devices such as display units, microphone, speakers, and facsimiles are connected, the information processing unit is configured so that data processing function is provided for each I/O device medium. The data processing functions include the code processing function, which handles code data, the voice processing function, which handles voice data, and dot processing function, which handles image data. Files which manage data input from I/O devices and data to be output to I/O devices are provided fore each I/O device medium. These files include a code file storing I/O code data, a voice file storing I/O voice data, and a dot file storing I/O image data.

However, in the conventional method, information of media systems is separately managed and processed. Two or more media information items to be processed are separately input, stored, and output. The problem here is that information items are not merged. For example, assume that voice information is output via a speaker while display information is being displayed on a display unit. In this case, in the conventional method, the code processing function and the voice processing function are synchronized with each other. Both functions must output required display and voice information while accessing code and voice files.

In recent years, data processing units have come into use in various fields. With this background, the method which enables construction of the desired data processing function is being expected for users having no detail knowledge of programs. With the spread of word processors, users having no program knowledge are becoming able to freely create display screens. To enable users having no detail program knowledge to construct the desired data processing function, the creation of display screens should be open to the users to allow them to use display screens.

However, in the conventional data processing units, the data processing program creates display screens and display screens required according to program execution are displayed. That is, in the conventional data processing units, the data processing program performs data processing while recognizing the display screen. Thus, in the conventional data processing units, the display screen is not separated from the data processing program. User cannot freely create systems using display screens.

In the conventional data processing units, if the contents of the display screen need to be changed, the data processing program itself must be changed. When a display screen format is changed such as a multiwindow screen format and an expansion format for the next screen, the data processing program must also be changed. Thus, the problem here is that users having no program details cannot easily change display screens.

It is an object of the present invention to resolve the above problems. For this purpose, this invention provides the following files:

(1) File which stores the data group to be output, using commands

(2) File used as a buffer which receives real data associated with a command

(3) File storing data the contents of which are half-fixed once stored

(4) File storing data the state of which changes

(5) File storing data attribute setting data

A link is set among data groups provided for each function. Data processing is determined with functional databases and a link among them. With this, different types of data are abstracted and are grouped into parts to enable the data to be registered. Since the data movement can be primarily defined, a means to increase the productivity of system development using multimedia can be provided.

In this invention, the functions in a terminal are divided into functional objects and messages are transferred among objects by commands. Messages are transferred among functional objects of the same type contained in each terminal and other terminals. This message transfer integrates the functions in the local terminal and those in other terminals. The transfer among the functional objects of the local terminal and different functional objects of other terminals occurs in the same way as for the transfer among functional objects of the local terminal. This enables easy construction of a distributed system.

In this invention, the terminals of a distributed system have files storing data the contents of which are half-fixed once stored and files storing data the state of which changes. Data associated with data to be transferred is stored in the related file. Each terminal transfers fixed data to other terminals together with commands assigned according to data attributes. For variable data, each terminal transfers real data to other terminals. This remarkably reduces the amount of transfer data between terminals.

In this invention, a file storing data for each data type and a command file managing command definitions in which procedure attributes are defined are provided. An assignment section is provided which assigns a command to a data piece of file storage data according to data attributes and, if necessary, which assigns a command to a command group assuming this group as data. This command group is defined by a set of data items to which the command assigned to the above data piece was assigned. Data is processed according to procedure attributes of the command to be assigned to the above command group. This provides simplified file management and enables efficient data processing.

In this invention, at least code, dot, and voice I/O devices are available as I/O devices. A media file is provided which manages data on these I/O devices for each data type. An output file is provided which manages the file location and output format information of a data group in the media file using a command which defines procedure attributes. This information is output from the media file as one piece of meaning information. Output data is stored in the media file and commands are set for the output file. A command is read from the output file and data is read from the media file according to the specification of that read command. A processing body is provided which outputs this read data to an associated I/O device. The above preparation enables multimedia data to be merged.

In this invention, the following files are provided:

(1) File storing screen information
(2) File storing the data processing program associated with screen information
(3) Object file managing pairs of identification codes of screen information and those of data processing programs associated with this screen information.

When screen information is displayed on the display screen, the data processing program associated with screen information is identified by referencing the object file. Data is processed according to the identified data processing program. In this case, the object file manages the identification code of related another screen information. When screen information is displayed on the display screen, the related another screen information is displayed in the specified display format.

Thus, any user who has no detailed program knowledge can freely construct the data processing function and can easily design a display screen.

[Brief description of the drawings]

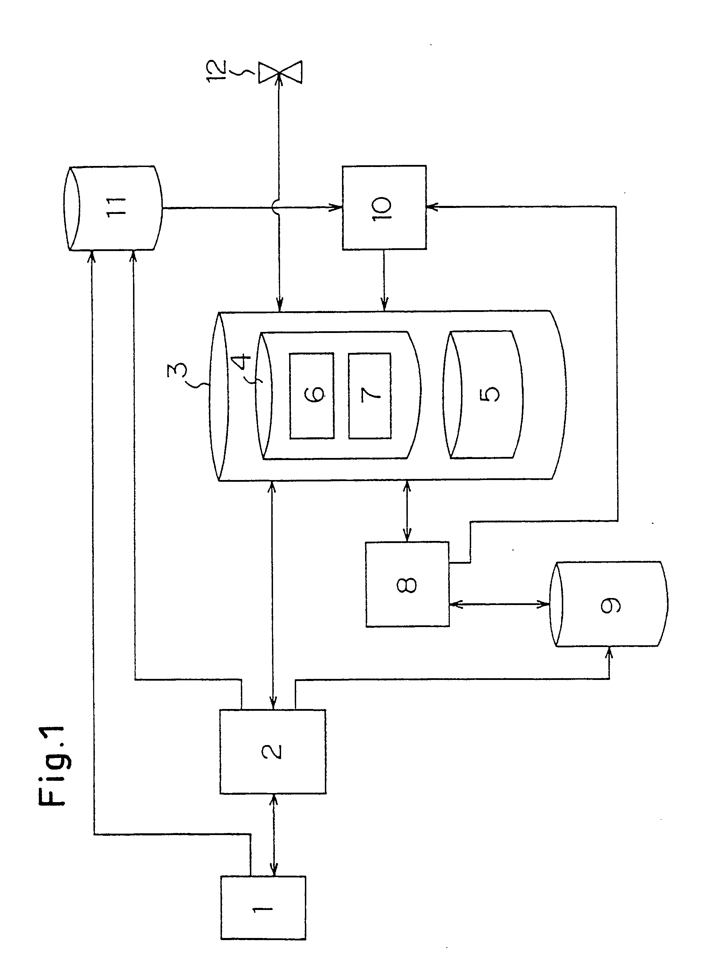

FIG. 1 illustrates an embodiment of the entire configuration of the functional database for this invention.

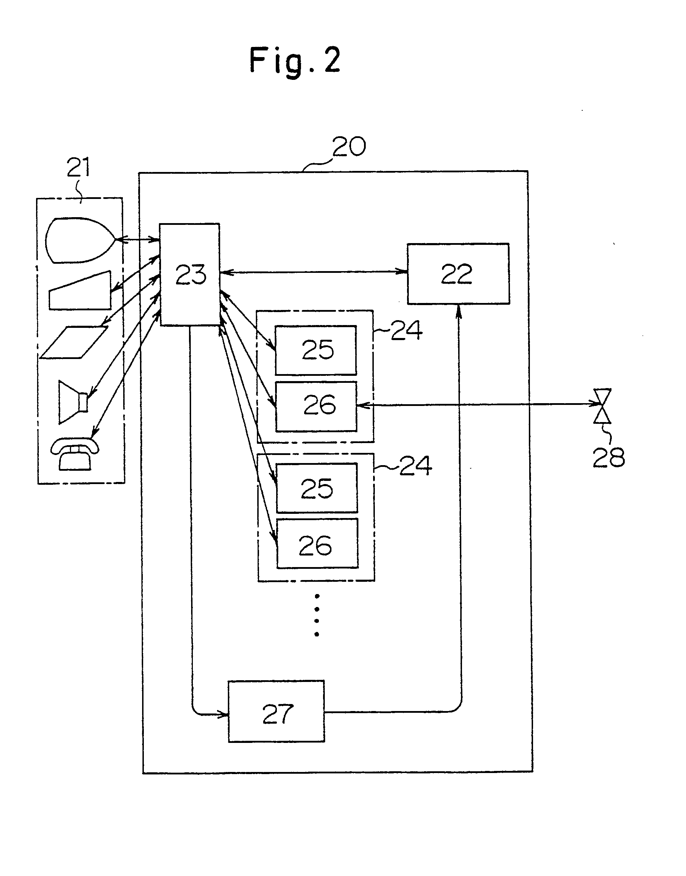

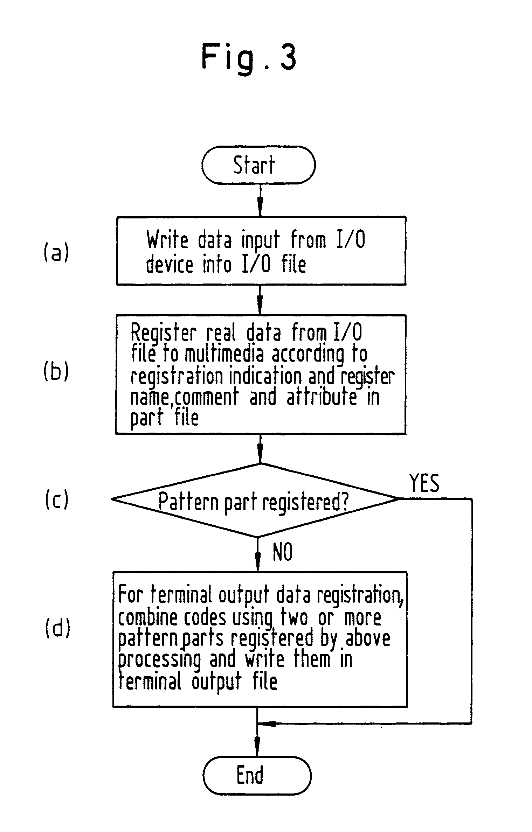

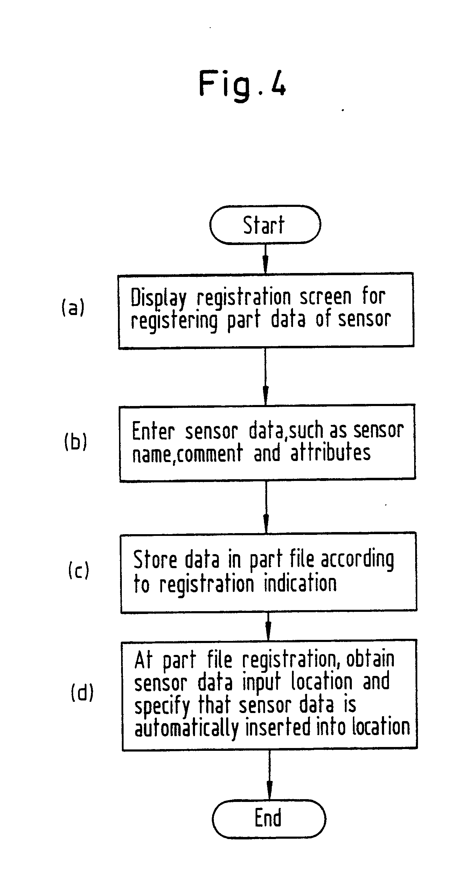

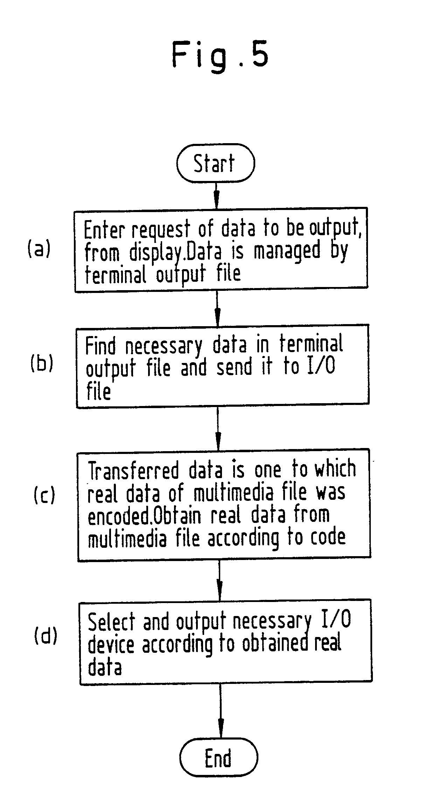

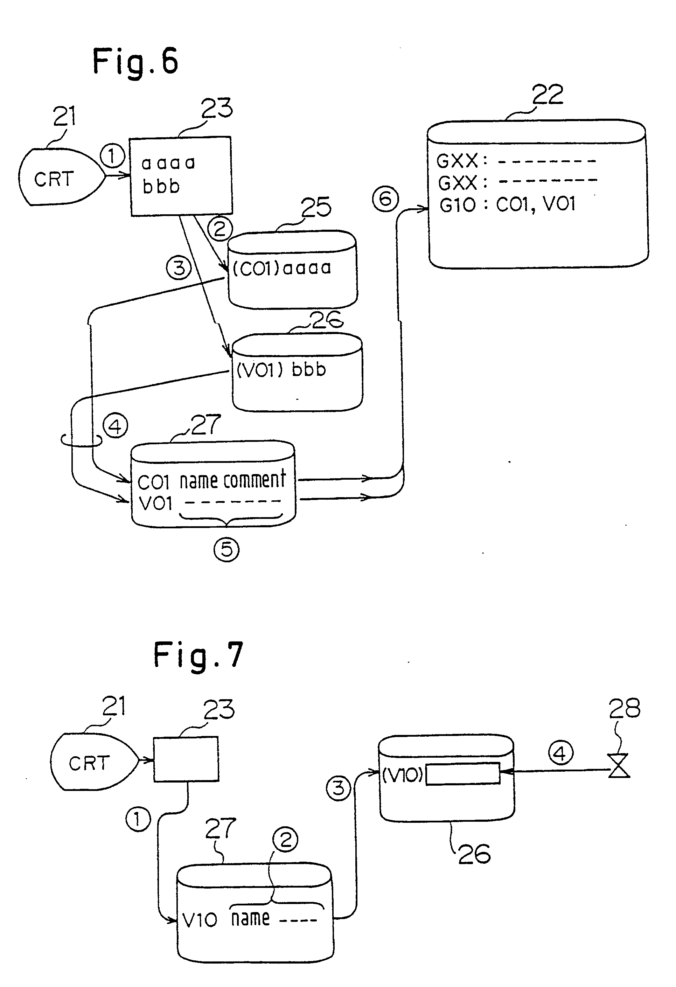

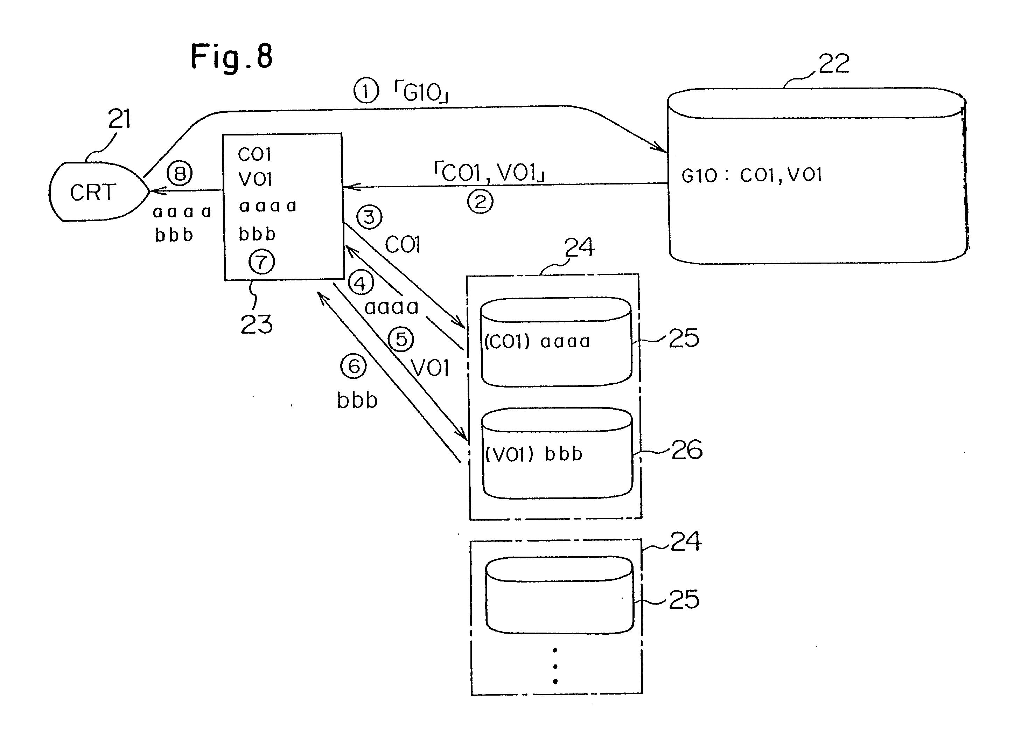

FIG. 2 illustrates an embodiment of the functional database method for this invention. FIGs. 3 and 4 illustrate the cart registration flow executed in the embodiment of FIG. 2. FIG. 5 illustrates the output flow executed in the embodiment of FIG. 2. FIG. 6 illustrates the screen creation executed in the embodiment of FIG. 2. FIG. 7 illustrates the part definition executed in the embodiment of FIG. 2. FIG. 8 illustrates the screen display output executed in the embodiment of FIG. 2.

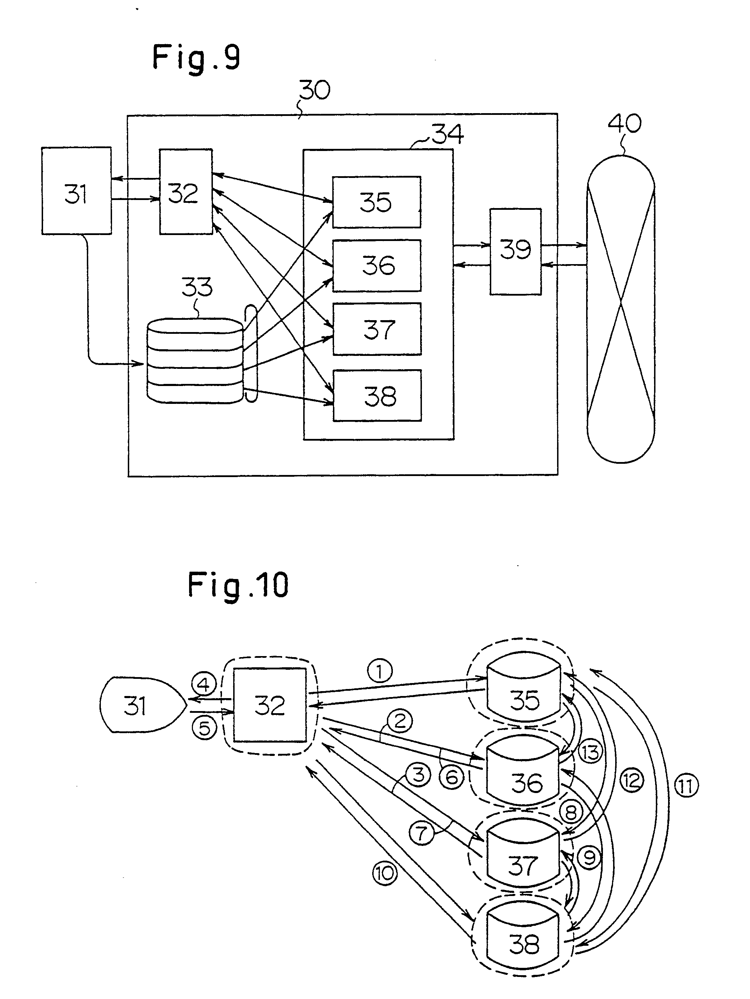

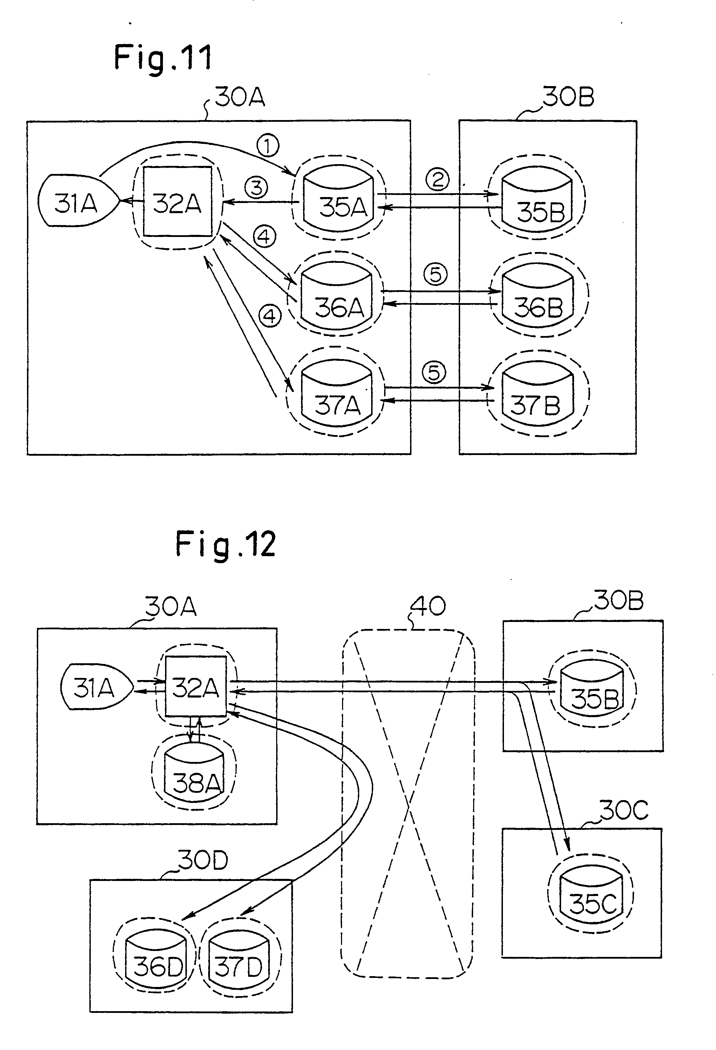

FIG. 9 illustrates an embodiment of the functional data processing method. FIG. 10 illustrates data input and output in the embodiment of FIG. 9. FIG. 11 illustrates the transfer between objects of the same type in the embodiment of FIG. 9. FIG. 12 illustrated object distribution in the embodiment of FIG. 9.

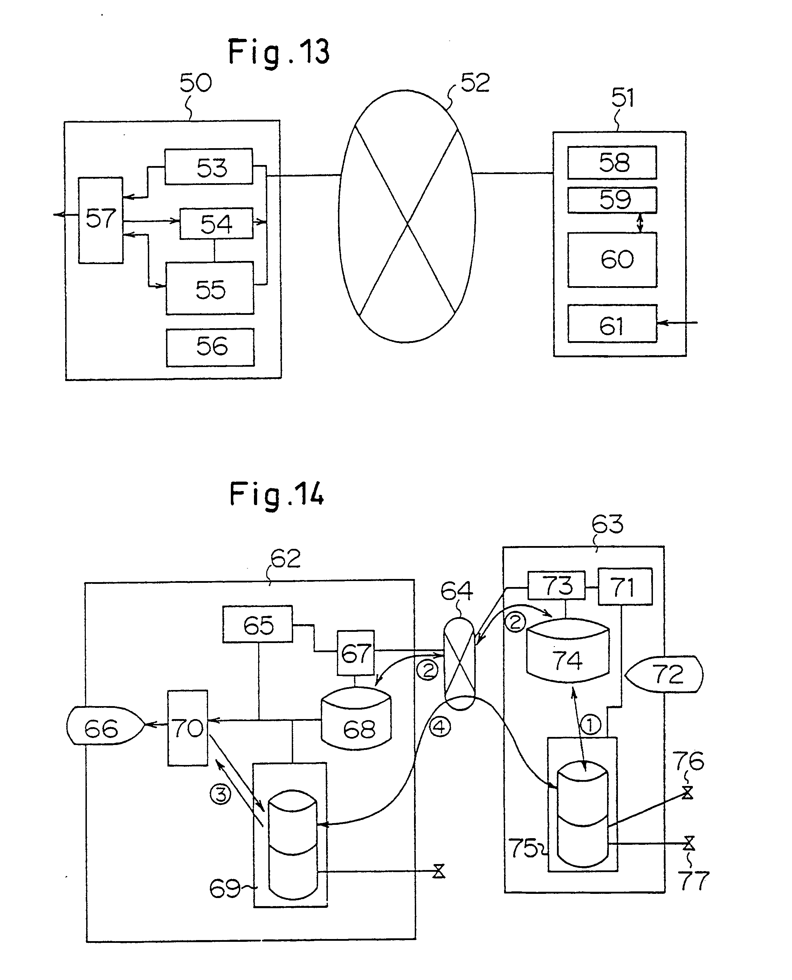

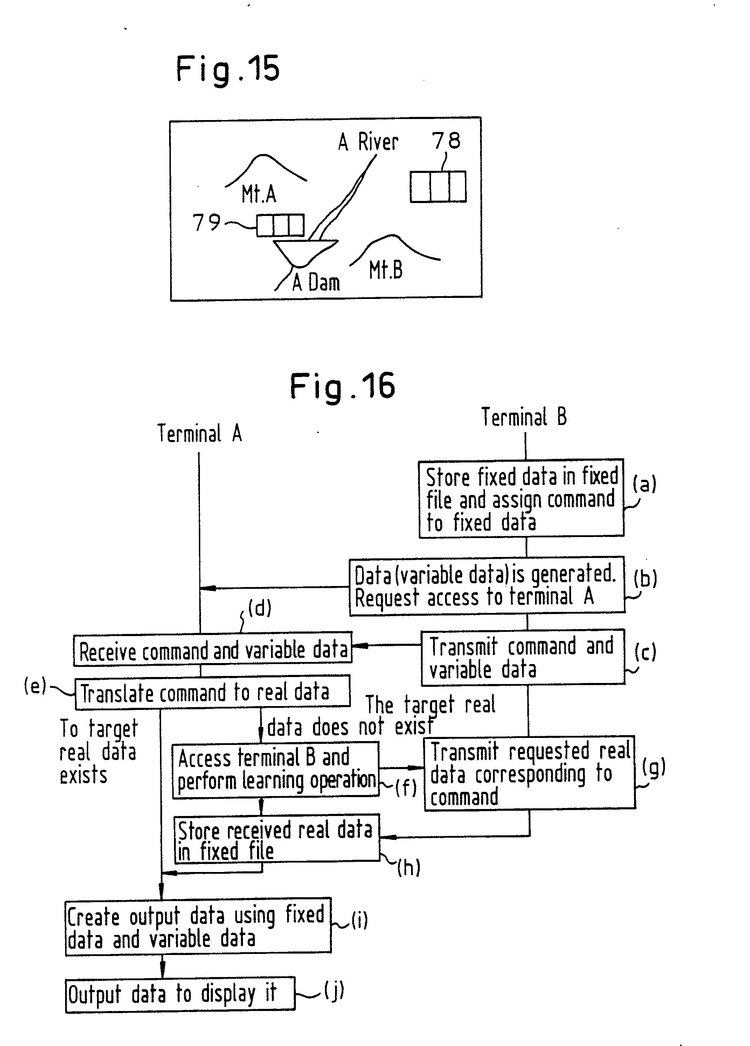

FIG. 13 illustrates an embodiment of the functional database method for this invention. FIG. 14 illustrates the detailed embodiment of FIG. 13. FIG. 15 illustrates display screen data in the embodiment of FIG. 14. FIG. 16 illustrates the processing flow executed in the embodiment of FIG. 14.

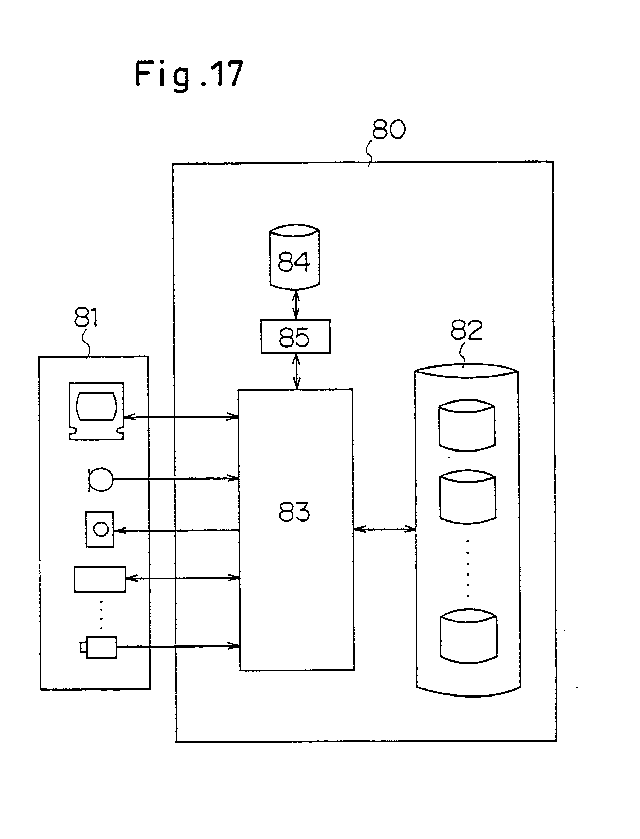

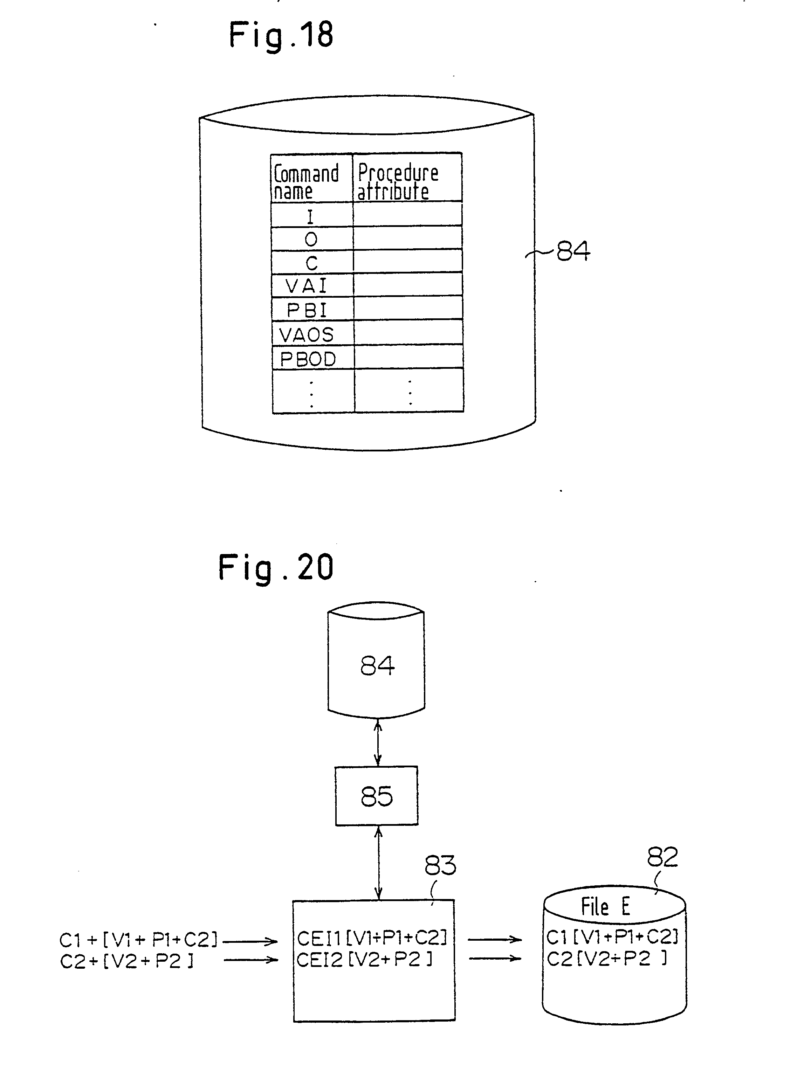

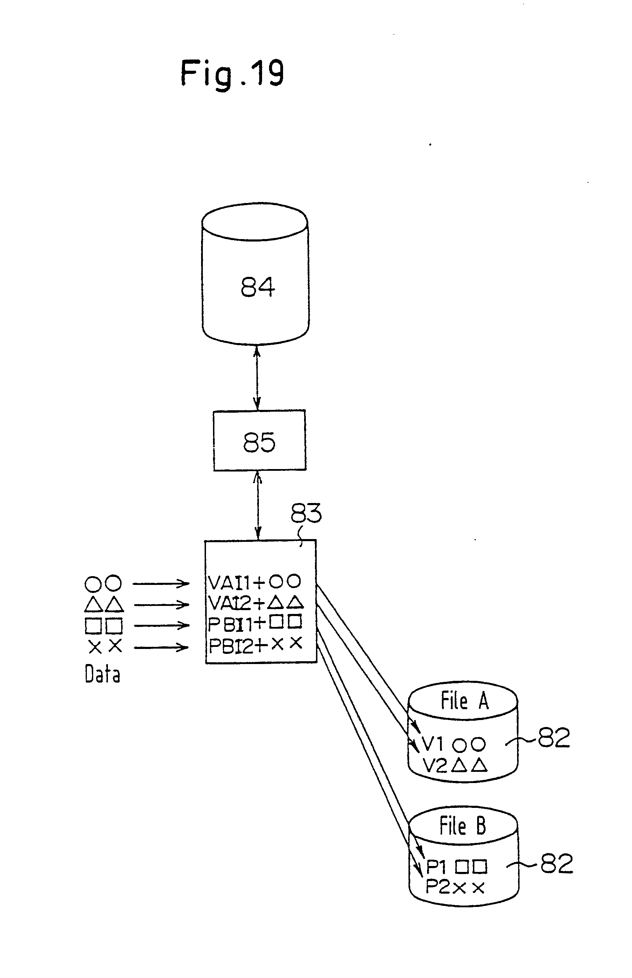

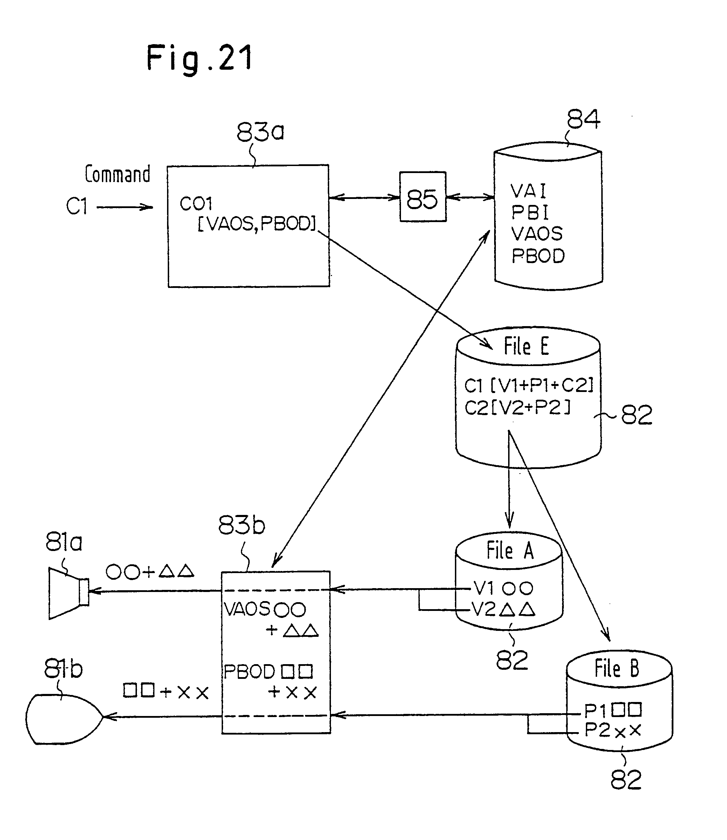

FIG. 17 illustrates an embodiment of the functional data processing method for this invention. FIG. 18 illustrates management data of the prepared command file in the embodiment of FIG. 17. FIGs. 19 and 20 illustrate data input in the embodiment of FIG. 17. FIG. 21 illustrates data output in the embodiment of FIG. 17.

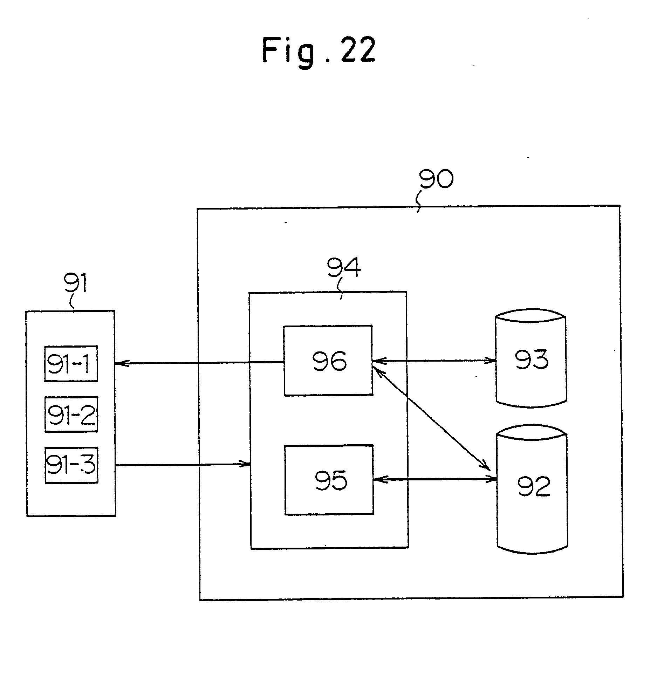

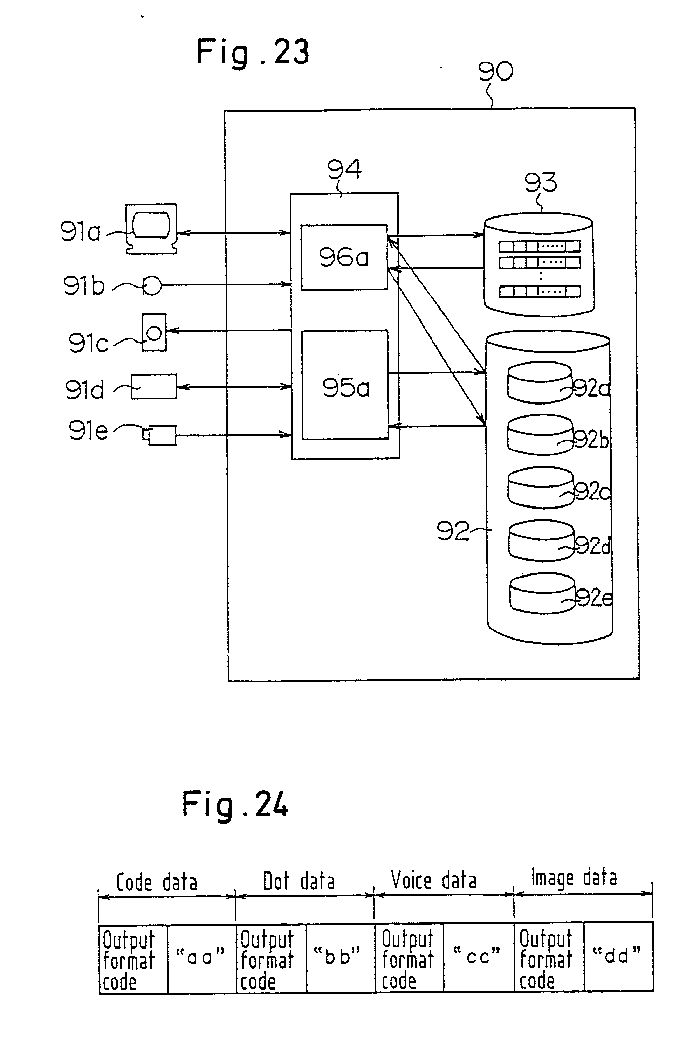

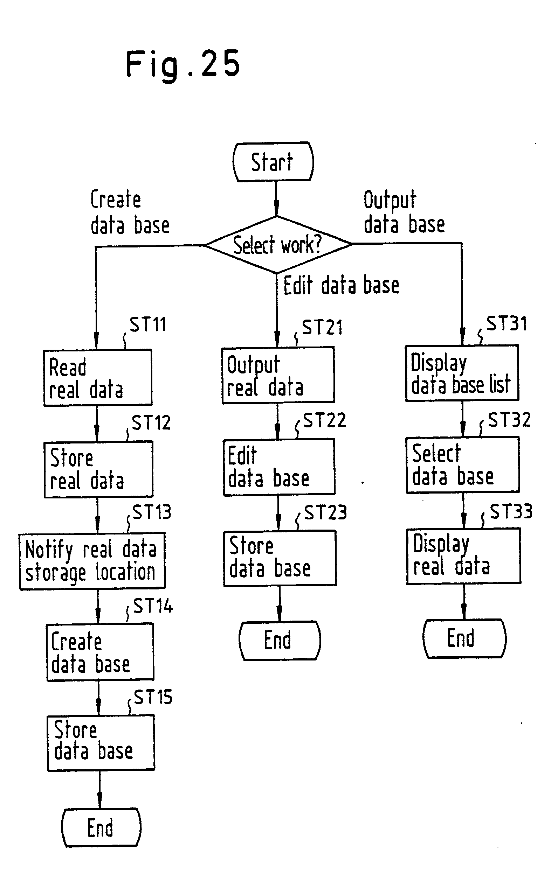

FIG. 22 illustrates the functional database method for this invention. FIG. 23 illustrates the detailed embodiment of FIG. 22. FIG. 24 illustrates management data of the prepared terminal output file in the embodiment of FIG. 23. FIG. 25 illustrates the processing flow executed in the embodiment of FIG. 23.

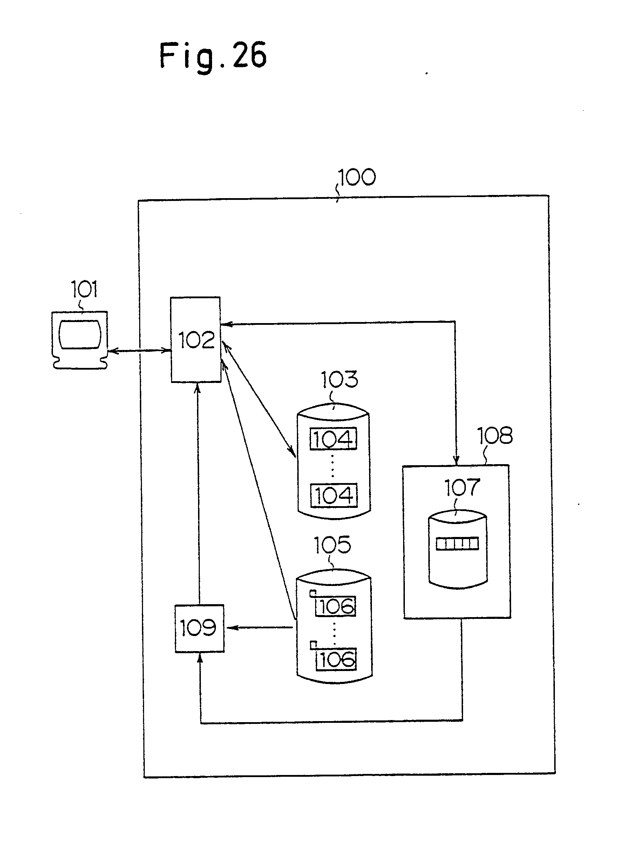

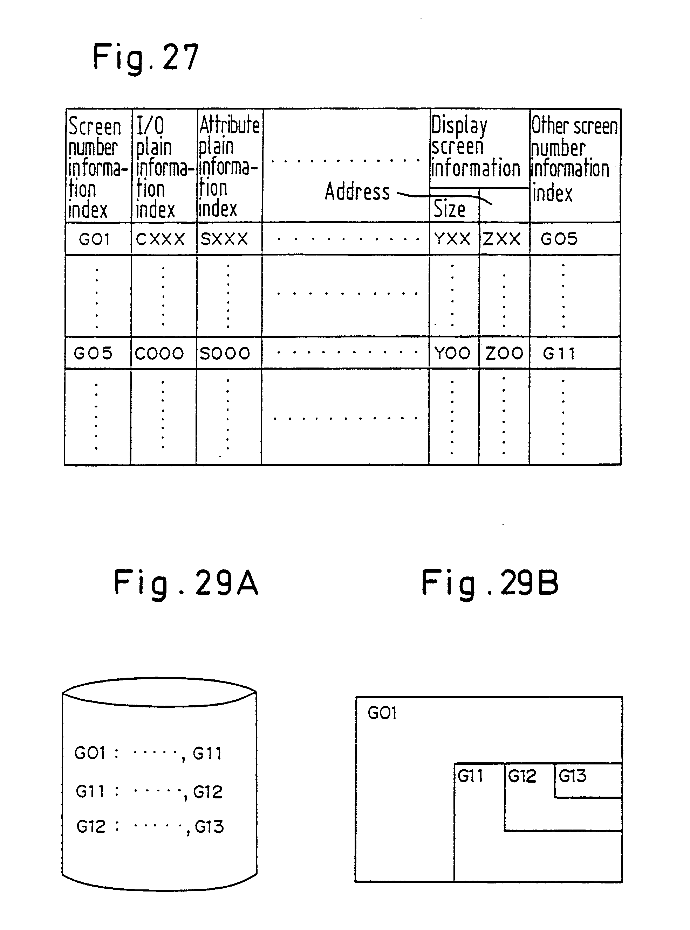

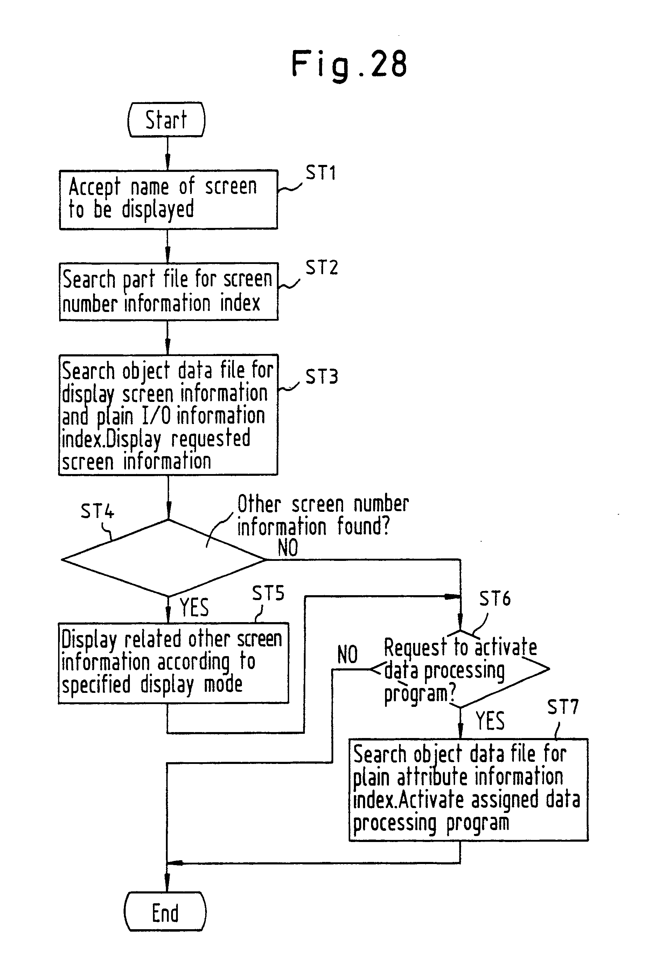

FIG. 26 illustrates the functional data processing method for this invention. FIG. 27 illustrates management data of the prepared object data file in the embodiment of FIG. 26. FIG. 28 illustrates the processing flow executed in the embodiment of FIG. 26. A and B in FIG. 29 illustrate the display executed in the embodiment of FIG. 26.

[Description of the preferred embodiment]

First, the entire configuration of the functional database which is basic to this invention is explained below.

FIG. 1 illustrates an embodiment of the entire configuration of the functional database for this invention. In this figure, 1 indicates an input device such as a word processor, digitizer, image scanner, microphone, and camera, an output device such as a display, printer, speaker, and television, or another site. 2 indicates an I/O table which provides an interface with an I/O device 1. 3 is all-data file which contains an entity data file 4 and a program file 5. The entity data file 4 manages real data such as multimedia information input from the I/O device 1. The program file 5 contains various methods (programs) provided to define the movement of data to be stored in entity data file 4. This entity data file contains the fixed file 6 and variable file 7. The fixed file 6 stores fixed real data the contents of which are half-fixed once stored. The variable file 7 stores variable real data the state of which constantly changes. The entity data file manages multimedia information sent from the I/O device 1, for each media type. Since the methods provided here function as fixed data, the program file 5 can be inserted as one of fixed files into the entity data file 4.

8 indicates the file management table. It manages the storage area for data registered in the entity data file 4 and assigns an object command used as an object ID to the specified data. 9 indicates a part file. The part file manages objects grouped into parts by managing the correspondence between an object command assigned from the file management table 8 and the identifier of the method of that object command. In this way, this invention divides real data using a certain unit and registers the divided data into the part file 9 as parts. Since a method can be handled as fixed data, it can be registered as abstracted part.

An object command assigned by the file management 8 is sent to tables, files, or the data processing function in the terminal. The command fetches a method to which it gave a meaning. It converts the method to an object and performs processing on data managed by the all-data file 3. This command is then sent to an object such as tables, files, and the data processing function in another terminal making up the database. It fetches a method to which it gave a meaning. It converts the method to an object and performs processing on data managed by the all-data file 3 of another terminal.

10 indicates a command link table. It manages the name of an object command registered in the part file 9, data pointed to by that command, and the method storage area information (first address and size information). 11 indicates a terminal output file. It manages output information of data to be viewed (to be output) using an object command. 12 indicates a sensor which gives variable data to the variable file 7 of the entity data file 4.

Processing of embodiments configured in this way is explained below.

① When receiving data from the I/O device 1, the I/O table 2 stores it in the entity data file 4 according to the empty area information managed by the file management table 8. If this data is fixed data, it is stored in the fixed file 6. If it is variable data, it is stored in the variable file 7.

② When receiving a request to group data stored in the entity data file 4 into parts from a user, the file management table 8 receives data type information specified by the user. It assigns a unique object command to data to be grouped into parts. This command consists of an identifier (method specification) set according to the contents or type of a file and the serial number of the identifier. For example, PB10005 is assigned as an object command to the fifth picture data.

③ When the file management table 8 assigns an object command, the part file 9 registers the object command and groups data assigned the object command into parts. The part file 9 registers the part name, summary, keyword, and comment used for retrieval with regard to an object grouped into parts. This registration occurs interacting with the user according to a menu.

④ The part file 9 registers the correspondence between an object command and a method. Then, the command link table 10 registers a registered object command and the storage area information on the all-data file 3. The storage area information is used for data and a method associated with that registered object command.

⑤ Afterwards, processing is not directly performed on data in the entity data file 4. It is performed on an assigned object command. For example, to view data specified by an object command group, this group is retrieved. Data and a method associated with the retrieved object command are identified according to the command link table 10. The identified data is viewed for the I/O device 1 according to the identified method.

⑥ The terminal output file 11 registers various viewing methods by registering object command combinations as object commands. This registration occurs interacting with a user using a menu. When a request to output a registered object command is issued from the I/O device, an object command associated with the requested object command is identified. Viewing is performed according to the data and method owned by the identified object command.

In this way, in the functional database method for this invention, data of the entity data file 4 is registered as a part and an object command is given to the part. This object command is made associated with a method grouped into parts in the program file 5. Data processing does not directly handle data of the entity data file 4. It is performed with an object command consisting of short fixed-length data. The following advantages are provided:

(1) Giving an abstract significance to real data in the entity data file 4 is possible by giving a significance to an object command according to a certain classification. For example, the type of associated real data can be determined by checking the number of first characters of an object command name. The data type is determined as a code, dot, fixed, or variable type.

(2) The size of real data in the entity data file 4 can be freely set. Thus, the contents of memory can be managed as variable-length data. This enables efficient use of memory.

(3) Short code-type data and long voice or picture data can be equally handled.

(4) Retrieval or transfer can be performed with a short object command, regardless of the size of the entity data file 4. This enables fast processing.

(5) Data is managed as a part. The part can be assigned the name and attributes.

The functional database is used for the information processing unit which distributes it to two or more terminals. A transmission destination terminal manages the data and method of the object command to be sent. In this case, data can be processed simply by sending the object command. If the transmission destination terminal does not manage the data and method of the object command to be sent, it requests the managing terminal to send the data and method of the transmitted object command. This enables data processing. That is, an object command need only be sent to enable data processing. This provides high-speed distributed processing. This also enables independent startup of a newly added terminal.

As explained in FIG. 1, in this invention, the databases are managed by objects based on the new object command concept. As shown in FIG. 1, the database constructed in this way uses the data structure most suitable for functionally storing required data, as data storage memory. This data structure is provided for each function. A link is set among data groups given for each function. The functional databases and the link among them are combined for unified movement.

The following detailed description deals with the embodiment of the functional database method of the invention which is constructed for each function.

FIG. 2 illustrates an embodiment of this invention. In this figure, the numbers indicate the following:

20: Information processing unit consisting of the CPU, memory and others
21: I/O devices associated with media
22: Terminal output file
23: I/O file.
24: Multimedia file
25: Fixed file
26: Variable file
27: Part file
28: Sensor or actuator from or into which constantly changing data is output or input

The terminal output file 22 is used to store data groups using an object command assigned to each data item. These data groups are to be output to the I/O device 21. When data defined in the terminal output file 22 is output to the I/O device 21, the input file 23 is used as a buffer which receives and expands real data associated with object commands given from the terminal output file 12. The multimedia files 24 store real data for each medium. Each multimedia file contains the fixed file 25 and variable file 26. The fixed file 25 stores real data (including a program used as a method) associated with object commands. This file contains fixed data the contents of which are half-fixed once stored. The variable file 26 stores real data associated with variable data object commands. It contains variable data which constantly changes. The part file 27 manages the correspondence between object commands and methods (management may occur using a hierarchical table structure). This file also stores the above files functionally provided, names of data items defined in those files, keywords, and attribute setting data which can specify other attributes.

Other required files (omitted from this figure) are a file which control files, a file which can determine object commands, and a file which connects data to a network. These files are provided for each function according to the system type.

The files are linked as follows:

The multimedia file 24 contains real data for each medium. These real data items are associated with object commands which are uniquely determined by a combination of processing and operation types for real data and numbers used to identify data positions. The terminal output file 22 stores data to be stored in the multimedia file 24, using an object command group consisting of several object commands. That is, an object command group having a certain meaning is considered to be data and one object command is assigned to it for management. To output data represented by one object command to the I/O device 21, an object command group associated with that object command is sent from the terminal output file 22 to the I/O file 23.

These object commands are converted to real data by the multimedia file 24 and the I/O file 23 outputs the real data to the I/O device 21. To enable data to be managed as a part, the cart file 27 contains definition information on attributes, such as an object command for that data (method is also specified), name, comment, and keyword. The part file 27 can determine the processing of the part in each functional file. The fixed file 25 in the multimedia file 24 stores pieces of output data. The variable data file 26 stores pieces of data the states of which constantly chance in the same way as for I/O data for the sensor or actuator 28.

Like this, in this invention, data is input as a predetermined part format. The files have data structures most suitable for their functions. They provides the following features since they have a link required for functions between functional databases:

(1) Data is abstracted and registered as a part. This enables data to be primarily defined.

(2) Real data is handled by a code called an object command. This enables various types of data items to be merged and processed.

(3) Real data is divided into fixed and variable data items. This enables efficient processing.

(4) Any I/O device 21 can be used.

(5) Connection is possible to a sensor, actuator, or network.

The operation of the embodiment of FIG. 2 is explained below according to FIGs 3 and 8. FIG. 3 illustrates the flow of data part registration from the I/O device 21 . FIG. 4 illustrates the flow of data part registration from the sensor 28. FIG. 5 illustrates the flow of output to the I/O device 21. FIG. 6 illustrates the screen creation. FIG. 7 illustrates the part definition. FIG. 8 illustrates the screen display output.

When parts such as pattern parts and those for created screen are registered from the I/O device 21 shown in FIG. 1, they are processed as shown in FIG. 3.

(a) Data input from the I/O device 21 such as a display or digitizer is written into the I/O file 23.

(b) Real data input into the I/O file 23 by the user through a menu or another means is registered in the associated multimedia file 24. Attributes such as an object command for the attributes of that real data, name, and comment are registered in the part file 27. The contents registered in the part file 27 are made to correspond to real data in the multimedia file 24 by an object command containing information on processing and operation types.

(c) This completes the simple pattern part registration.

(d) For terminal output data registration, the codes (object commands) are combined using two or more pattern parts preregistered by the above processing (a) and (b) and are written into the terminal output file 22.

For example, processing in FIG. 4 occurs to register the sensor 28.

This processing is explained below.

(a) The registration screen is displayed to register data of the sensor part.

(b) The sensor data, such as the sensor name, comment, and attributes, is input from the registration screen.

(c) Data input by processing (b) is stored in the part file 27 according to the registration indication.

(d) The input position for sensor data is acquired by registration in the part file 27. The automatic input of the sensor data into that position is defined.

Processing in FIG. 5 occurs to output data such as the screen created by part registration to the I/O device 21. This processing is explained below.

(a) A request to output data managed by the terminal output file 22 is input from the I/O device 21 (display, etc.). The request is sent to the terminal output file 22.

(b) Necessary data is found in the terminal output file 22 and is sent to I/O file 23.

(c) Data sent to the I/O file 23 is the one encoded from real data in the multimedia file 24. Thus, associated real data is obtained from the multimedia file 24 according to the code (object command).

(d) Necessary I/O device 21 is selected for output according to obtained real data.

The above processing is detailed below.

An example of screen creation is explained according to FIG. 6. The following circled numbers such as ① correspond to the numbers in FIG. 6.

① Data, such as aaaa and bbb, is input from the I/O device 21 (CRT display, etc.) to the I/O file 23.

② aaaa is stored in the fixed file 25 according to the registration indication. For example, object command C01 is assigned. The command link table 10 explained in FIG. 1 manages the fact that the object command C01 points to data aaaa.

③ In a similar way, bbb is stored in the variable file 26 and object command V01 is assigned.

④ An area is allocated to register these object commands C01 and V01 in the part file 27 as parts.

⑤ Attributes, such as names, comments, and keywords, are input for object commands C01 and V01 and are registered in the part file 27.

⑥ Object commands C01 and V01 are sent to the terminal output file 22. Screen number G10 is taken as new screen data. C01 and V01 are stored as data for screen number G10.

For simple screen definition, processing in FIG. 7 occurs. An example of sensor data of sensor 28 is explained.

① The part registration is instructed from the screen for registering a part. An area for attributes of that part is allocated in the part file 27 and object command V10 of that part is assigned.

② Attributes, such as the name, comment, and keyword, are input and registered in that area.

③ When attributes are registered, the area for sensor 28 data is allocated in the variable file 26 in the multimedia file.

④ Afterwards, if input occurs from sensor 28, input data is automatically entered in the area set in the variable file 26. That is, object command V10 is assigned in the input interface section of sensor 28 and input data is sent to variable file 26. With this, data can be automatically updated by the processing function of the variable file 26.

FIG. 8 shows an example of outputting the screen registered in the terminal output file 22 to I/O device 21.

① When one screen is selected from the screen contents, associated object command G10 is sent to the terminal output file 22.

② In the terminal output file 22, the contents of G10, or object commands C01 and V01, are fetched and sent to the I/O file 23.

③ and ④ Object commands C01 and V01 stored in the I/O file 23 are immediately sent to the multimedia file 24. The contents of C01, or data aaaa, are returned.

⑤ and ⑥ In a similar way, data bbbb, or the contents of V01, is returned to V01.

⑦ Data items aaaa and bbb are stored in the I/O file 23.

⑧ When all data items are stored in the I/O file 23, they are displayed on the CRT display of the I/O device 21.

As explicitly shown by the above example, these functional files are grasped by an concept similar to an object into which a well-known object-oriented method and data are united. It can be considered that an object command assigned to data performs a part of a message. From a different point of view, object commands contain actual data and information indicating how the data is to be processed. The link among functional databases is established centering on these object commands.

Thus, using the functional database method in the embodiment of FIG. 2, different types of data items can be abstracted and registered as parts. With this, the productivity of system development in which multimedia data is handled can be improved. Especially, system development with high reliability, flexibility, and expandability can be provided since screen creation, screen display, and data input and output from sensors can be easily incorporated without conventional large-scale programs.

The following detailed description deals with the embodiment of functional data processing method of this invention which is constructed on a distributed system is explained according to a newly introduced concept, or object command.

FIG. 9 illustrates an embodiment of this invention. In FIG. 9, the numbers indicate the following:

30: Information processing device consisting of the CPU and memory

31: I/O device associated with various media

32: I/O object which inputs or outputs data into or from the I/O device 31

33: Link information making up the data link of data entered as a part

34: File control object which controls the whole file

35: Output format object which manages the collection of semantic data items to be output to the I/O device 31

36: Fixed data object which manages the collection of data items (data segments) half-fixed in the system

37: Variable data object which manages the collection of variable data items in the system

38: Part data object which manages the collection of attribute setting data items which define all data items used in the system, that is, pattern pieces and semantic combined data

39: Network control object which controls the communication with other terminals

40: Network such as a switched line

The information processing unit 30 is one of several terminals connected by the network 40.

In this invention, a function in a terminal in the system is divided into functional objects in which data and a data processing means are combined. A message having formatted object commands is exchanged between objects. A message is exchanged between a functional object in a terminal and the homogeneous functional object in another terminal. With this message transfer, other terminals are made identical and the functions in the terminals are integrated for each function. The communication between a functional object of the local terminal and a different functional object of another terminal is done in the same way as for the communication between functional objects of the local terminal. This enables functions to be remotely distributed.

The following objects are provided as the above functional objects:

Output format object 35 is a database object which contains the collection of semantic data items. It stores segments of media data to be output to the I/O device 31. These segments are converted to object commands for storage. The I/O object 32 stores an object command group given from the output format object 35. It makes the object command group match the real data items in the fixed data object 36 to those in variable data object 37. It can serve as a buffer which outputs or inputs data to or from the I/O device 31. The fixed data object 36 is a database object which stores commands and data the contents of which are half-fixed once created. These commands and data are used by the system. The variable data object 37 stores commands and data which constantly changes. These commands and data are used by the system. The part data object 38 is a database object which stores attribute setting data for defining pattern segments and semantic combined data used in the system.

Necessary functional objects are also provided for other terminals.

In this way, this invention broadly divides functions necessary for the system which is remotely distributed via the network 40 such as a switched line. Each divided function is converted to an object. For example, an output format group which primarily defines the output to the I/O device 31 is converted to an object. Only fixed or variable data is collected and converted to an object. File control which can organically connect distributed files for each functional file is converted to an object. Network control is converted to an object to primarily determine the message passing between distributed systems.

In this way, all functions in the system are divided for each function and operation is possible in cooperation with other terminals. Thus, data of the local system can be combined or merged with data of two or more other terminals. Necessary information can consist of local data and data of other terminals. Thus, transmission information can be shortened and its costs can be reduced compared with transfer of all data items between terminals. Control of communication between objects is converted to an object. With this control, connection is possible to any desired place and a link among two or more terminals can be reestablished to send data. Since any communication destination can be selected, sensor, actuator, and network systems can be handled in the same way.

By converting file control to an object, data having prepared capacity or having more than prepared capacity can be naturally increased or an empty area of an alternate terminal can be used without letting other objects consider it. This enables easy prevention of data missing and system abnormality.

Operation of the embodiment of FIG. 9 is explained according to FIGs. 6 and 8 previously explained and FIGs. 10 and 12. FIG. 10 illustrates data input and output. FIG. 11 shows an example of transfer between homogeneous objects. FIG. 12 shows an example of object distribution.

An example of screen display and creation in the embodiment of FIG. 9 is explained according to FIG. 10. The numbers such as ① corresponds to those in the figure.

① In response to a screen display request, the output format object 35 transfers object command data it manages to the I/O object 32.

② and ③ The I/O object 32 obtains real data from the fixed data object 36 and variable data object 37 according to the transferred object command.

④ The I/O object 32 outputs the real data to the I/O device 31 such as a CRT display. The fixed data object 36 and variable data object 37 are made to correspond to media, such as code, dot, voice, and picture systems. The output destination of the I/O device 31 is selected corresponding to the medium.

For screen creation, the following processing is performed:

⑤ Screen data entered from the I/O device 31 is stored in the I/O object 32.

⑥ and ⑦ Real data stored in the I/O object 32 is sent to the fixed data object 36 and variable data object 37. Here, the data is assigned an object command.

⑧ and ⑨ The object command is once passed to the part data object 38.

⑩ Then, the attributes of the object commands, such as the name, comment, and keyword, are input from the I/O device 31 and are registered. With this, data making up the screen is grouped into parts. This completes the definition of the data as the object command.

⑪ to ⑬ Screen creation and registration are completed by storing the object commands in the output format object 35.

The following· description deals with the transfer of a message between homogeneous objects according to FIG. 11.

① For example, to display a screen on the I/O device 31A, an object command of the screen is sent to the output format object 35A in response to a request from the I/O device 31A.

② The output format object 35A does not contain data associated with the requested object command. In this case, 35A requests the output format object 35B of the terminal 30B having that data to send it.

③ Data obtained by the request, that is, the object command group indicating fixed of variable data, is sent to the I/O object 32A.

④ and ⑤ The I/O object 32A inquires of fixed data object 36A and variable data object 37A about the conversion of the received object command into real data. If 32A does not contain data, it obtains the data from the terminal 30B having the data.

As explained above, since inter-terminal cooperation is possible objects can be distributed as shown in FIG. 12.

As FIG. 12 shows, when the I/O object 32A displays a screen in response to a request from the I/O device 31A, it requests the screen output format by message passing if the terminal 30A does not have the screen output format. This request is issued to the output format objects 35B and 35C of other terminals 30B and 30C. In this case, a formatted object command need only be sent. Practically, the output format object 35B and output format object 35C can be viewed as one object. Using the received output format, the object command is sent to the fixed data object 36D and variable data object 37D of another terminal 30D. The real data associated with the command is received and can be displayed on the I/O device 31A.

In this way, functional distribution is achieved by providing objects for each function and connecting them to other terminals.

Detailed processing by the objects is explained above in FIGs. 6 and 8. That is, for screen creation, processing explained in FIG. 6 is performed. For part definition, processing explained in FIG. 7 is performed. For screen display output, processing explained in FIG. 8 is performed. In the explanations of FIGs 6 and 8, the terminal output file 22 is equivalent to the output format object 35. The I/O file 23 is equivalent to the I/O object 32. The fixed file 25 is equivalent to the fixed data object 36. The variable file 26 is equivalent to the variable data object 37. The part file 27 is equivalent to part data object 38.

Processing explained in FIGs. 6 and 8 can be performed in almost the same way when object processing targets are centered on one terminal and when object processing is distributed to two or more terminals. When object processing is distributed to two or more terminals, the network control object 39 shown in FIG. 9 sends an object command via the network 40 to the associated object of the terminal containing processing targets.

In this way, using the functional data processing method of the embodiment of FIG. 9, distributed systems can be easily constructed and the system development man-hour can be reduced. Systems with high reliability and flexibility can also be constructed.

The following detailed description deals with the embodiment of the functional database method of the invention which reduces the amount of data transferred between databases built in a distributed system.

FIG. 13 illustrates an embodiment of this invention. In FIG. 13, the numerals 50 and 51 indicate terminals which form information, processing units. The numeral 52 indicates a network. A distributed database system consists of the network 52 and the terminals 50 and 51 connected to the network 52. In this embodiment, it is assumed that data is transferred from the terminal 51 to the terminal 50.

The receiving terminal 50 has an I/O section 53, a learning section 54, a fixed file 55, a variable file 56, and a data output section 57. The learning section 54 requests real data to the transmitting terminal if no real data corresponds to an object command. The fixed file 55 is used to store fixed data. The variable file 56 is used to store variable data. The transmitting terminal 51 has an I/O section 58, a command assignment section 59, a fixed file 60, and a variable file 61. The command assignment section 59 assigns an object command to a fixed data item. The fixed file 60 is used to store fixed data. The variable file 61 is used to store variable data.

According to this invention, it has been noticed through analysis of the contents of a database that the database consists of a large amount of fixed data (including programs as methods) and a small amount of variable data which chances with time. Therefore, data is divided into fixed data and variable data and they are filed. The system is configured as follows in order to reduce the amount of data transferred between terminals. For variable data, real data is transferred as required. For fixed data, a data group to be transferred is transferred using an object command (compressed data code) instead of real data. Then the object command is translated to real data. If the fixed file in the local terminal does not contain the target real data, the real data is copied from the fixed file in another terminal which contains the data.

The following description deals with the operations in the embodiment of FIG. 13 in which the system is configured as described above.

The terminal 51 files generated data in the local database. Data to be filed is divided into two types: variable data and fixed data. Variable data is input from external units and changes with time. Fixed data is fixed regardless of time (for example, background data fixed in image data). Which data is generated is determined in advance. Depending on the data type, variable data is stored in the variable file 61, and fixed data is stored in the fixed file 60. Data stored in these files can be displayed on a display unit in the terminal 51 which is not illustrated in the figure. Processing programs which operate as methods can be assumed to be fixed data. Therefore, such programs are stored in the fixed file 60.

To transfer the filed data to the terminal 50, the I/O section 58 in the terminal 51 connects the local terminal to the destination terminal 50 and fetches the data to be transferred. For fixed data, the command assignment section 59 assigns the corresponding object command to the data. The I/O section 58 transmits the object command assigned to the data to the terminal 50 via the network 52. For variable data, the I/O section 58 fetches the real data from the variable file 61 and transmits it to the terminal 50.

In the terminal 50, the I/O section 53 receives the data transferred from the terminal 51 and transfers the received data to the data output section 57. The data output section 57 passes the object command in the transferred data to the fixed file 55 to retrieve the corresponding real data. If the data output section 57 finds that the fixed file contains no real data corresponding to the object command, it activates the learning section 54. The activated learning section 54 accesses the source terminal 51 via the network 52 and requests the real data corresponding to the object command. In response to this request, the I/O section 58 in the terminal 51 fetches the fixed data corresponding to the issued object command from the fixed file 60 by referencing the command assignment section 59. Then it transmits the fixed data to the terminal 50. When the real data is received, the leaning section 54 stores the real data corresponding to the object command in the fixed file 55. This processing enables the data output section 57 to obtain the fixed data corresponding to the object command. Thus the data output section 57 obtains real output data consisting of the fixed data and the variable data received together with the object command.

FIG. 14 illustrates the detailed embodiment illustrated in FIG. 13.

In FIG. 14, the numeral 62 indicates a terminal which functions as a data gathering center (hereafter it may be called terminal A). The numeral 63 indicates a terminal which functions as a supervisory station (hereafter it may be called terminal B). The numeral 64 indicates a switched network. The terminal 62 is configured so that it has a processing unit 65, an I/O unit 66, a communication control unit 67, an I/O data file 68, a real data file 69, and an I/O table 70. The processing unit 65 contains memory. The I/O unit 66 has a display, keyboard, and others. The I/O data file 68 is used to store data transmitted to or from another terminal. The real data file 69 consists of a fixed file and variable file. The I/O table 70 transfers data between the I/O unit 66 and the I/O data file 68 or the real data file 69. The terminal 63 is configured so that it has a processing unit 71, an I/O unit 72, a communication control unit 73, an I/O data file 74, a real data file 75, a water level sensor 76, and a rainfall sensor 77. The water level sensor 76 detects a water level. The rainfall sensor 77 detects rainfall.

Display screen data as illustrated in FIG. 15 is assumed to be displayed to describe the operations in the embodiment of FIG. 14. As to display screen data in FIG. 15, the picture in the background and character strings such as "Mt. A" and "A River" are stored in the fixed file as fixed data. Rainfall detected by the corresponding sensor 77 is displayed in the field 78. A water level of the dam detected by the corresponding sensor 76 is displayed in the field 79. The values displayed in these fields change with time. The image data illustrated in FIG. 15 is stored in the terminal 63 as a database. The data is transferred to the terminal 62 for a purpose of displaying it on an output unit and other purposes. In this embodiment, it is assumed that object command C001 is assigned to fixed data consisting of the picture in the background and character strings. The embodiment adopts a configuration in which information on the locations of assigned object command C001 and the corresponding fixed data is stored in a management table which is not illustrated in the figure.

The following description deals with the operations in the embodiment of FIG. 14 with referencing the flowchart illustrated in FIG. 16. In the following description, a number ① to ④ correspond to the number in FIG. 14.

① In terminal B, fixed data is stored in the fixed file of the real data file 75, and object command C001 is assigned to the fixed data ((a) in FIG. 16). The water level sensor 76 and the rainfall sensor 77 input water level data and rainfall data to the variable file of the real data file 75. Object command C001 specifying the fixed data and the real data on the water level and rainfall stored in the variable file are stored in the I/O data file 74 as data to be transferred.

② With generation of the variable data, the processing unit 71 in terminal B requests the switched network 64 to access terminal A via the communication control unit 73 ((b) in FIG. 16). When remote terminal A responds to this request, the processing unit 71 transmits the data stored in the I/O data file 74 (object command and variable data) to terminal A under control of the communication control units 73 and 67 ((c) in FIG. 16). When terminal A receives the data, it stores the data in the I/O data file 68 ((d) in FIG. 16).

③ When the I/O table 70 in terminal A receives the object command and variable data transferred from the I/O data file 68, it fetches the real data specified by the received object command from the fixed file of the real data file 69 to translate the object command to real data ((e) in FIG. 16). The I/O table 70 performs the data fetch by referencing the management table described above which manages information on the locations of object commands and the corresponding real data items. When the I/O table 70 obtains the target real data, it creates output data using the obtained real fixed data and the transmitted variable data ((i) in FIG. 16). Then it outputs the data to the I/O unit 66 to display it (-(j) in FIG. 16). If it is found during translation of the object command to real data that the real data file contains no real data corresponding to the object command, the learning operation is started to obtain a copy of the target real data.

④ The learning operation starts with access to remote terminal B via the switched network 64 by the communication control unit 67. When terminal A is connected with the remote terminal, it transmits the object command to request learning ((f) in FIG. 16). Terminal B fetches the real data corresponding to the object command (C001 in this embodiment) from the real data file 75 and transmits the data to terminal A ((g) in FIG. 16). When terminal A receives the real data, it stores the data in the fixed file of the real data file 69 ((h) in FIG. 16). It also stores information on the location of the real data which corresponds to the object command in the management table described above. Terminal A creates output data using the real fixed data transmitted by the learning operation and the variable data transmitted in advance ((i) in FIG. 16). It outputs the data to the I/O unit 66 to display it (-(j) in FIG. 16).

It is assumed that center terminal A regularly monitors variable data on rainfall and dam water levels after operations ① to ④ described above. Terminal A periodically receives data transmitted from terminal B. At this time, no learning is required because the real fixed data is stored in the fixed file in terminal A.

Thus, the functional database method in the embodiment illustrated in FIG. 13 can be used to reduce the transfer time and communication cost substantially because object commands are transferred instead of the corresponding real data items. Therefore, the amount of data filed in each terminal can also be reduced materially.

The following detailed description deals with the embodiment of the functional database method of the invention which simplifies file management to increase efficiency in data processing.

FIG. 17 illustrates an embodiment of this invention. In FIG. 17, the numeral 80 indicates an information processing unit which has a CPU, memory, and other components. The numeral 81 indicates a group of I/O devices for various types of media. The numeral 82 indicates a group of files each of which corresponds to an I/O device 81. The files manage data required for execution of data processing. The numeral 83 indicates an I/O table processor. The I/O table processor stores data from an I/O device 81 in the corresponding file 82 and outputs data read from a file 82 to the corresponding I/O device 81. The numeral 84 indicates a command file which manages definitions of commands defining procedure attributes. The numeral 85 indicates a command assignment section. The command assignment section assigns an object command to a data item stored in a file 82. It also assigns an object command to a group of object commands defined by a group of the data items to which the object commands are assigned as data.

The following description deals with the operations in the embodiment of FIG. 13 in which the system is configured as described above.

Under the conventional method, a data item is stored in a file 82. According to this invention, the system is configured as follows. The command assignment section 85 assigns an object command defined by the command file 84 to a data item. Then the I/O table processor 83 stores the data item to which the object command is assigned in a file 82. An assigned object command corresponding to a data item defines the procedure attribute for the data item. For example, P1 is an object command indicating that the corresponding data item is to be displayed from the specified position on a display screen. For another example, object command V1 indicates that the corresponding data item is to be output to a speaker with the specified length in bytes assumed to be a sound. As shown in these examples, object commands define the method for data and information on data attributes.

This system is configured so that an object command can also be assigned to a group of object commands defined by a group of the data items to which the object commands are assigned as data. For example, assume that object command O1 is assigned to a group of object commands [P1 + V1]. Object command P1 indicates screen display processing. Object command V1 indicates output processing to a speaker. Therefore, object command 01 has the both procedure attributes. For another example, assume that object command C1 is assigned to object command group [P1 + V1 + C2]. According to the procedure attribute given to object command C1, screen display processing indicated by P1 and output processing to a speaker indicated by V1 are performed simultaneously, then execution of the procedure attribute given to the C2 starts. This enables processing to progress to the next screen display processing and output processing to the speaker.

FIG. 18 illustrates an embodiment of management data in the command file 84 illustrated in FIG. 17. The command file 84 manages the definitions of object commands which defines procedure attributes. The command file 84 in the embodiment of FIG. 18 is configured to manage the definitions of the object commands as follows. Object command I defines a procedure attribute of input processing. Object command O defines a procedure attribute of output processing. Object command C defines a procedure attribute of multiple processing. Object command VAI defines a procedure attribute of input processing (I) of voice data (V) to a voice file (A). Object command PBI defines a procedure attribute of input processing (I) of image data (P) to an image file (B). Object command VAOS defines a procedure attribute of output processing (O) of voice data (V) from the voice file (A) to a speaker (S). Object command PBOD defines a procedure attribute of output processing (O) of image data (P) from the image file (B) to a display (D).

The following description deals with the detailed operations in the embodiment of FIG. 17 using FIGs. 19 to 21.

The first description deals with input processing of data from an I/O device 81 to a file 82 using FIG. 19.

A data item from an I/O device 81 is written in the I/O table processor 83 first. The command assignment section 85 determines an object command to be assigned to the written data item by displaying management data in the command file 84 on a menu and interacting with the operator. Object command VAI is to be used for another data item. The command assignment section 85 attaches a serial number unique in the system to the object command to be assigned. Then it assigns the object command. In the embodiment of the figure, the command assignment section 85 assigns object command VAI1 to data item OO,

object command VAI2 to data item △△, object command PBI1 to data item ▢▢, and object command PBI2 to data item ××. Numbers such as that indicates locations in files 82 are used for serial numbers.

The I/O table processor 83 transmits the object command assigned in this way to the file 82 corresponding to the medium and specified for the data input destination. For example, object command VAI1 described above is transmitted to file A which is a voice file. In actual processing, for example, the I/O table processor 83 transmits the object command to the object management section which is not illustrated in the figure. When the object management section receives the object command, it decodes the object command and distributes it to the file specified for the data input destination.

When the file 82 receives the object command from the I/O table processor 83, it stores the data item corresponding to the object command. For example, for object command VAI1, file A stores data item OO. In this way, data item OO to which object command V1 is assigned is stored in file A.

FIG. 19 is an embodiment of storing physical pairs of data items and object commands assigned to them in files 82. The following configuration can also be made. Each data item stored in files 82 is assumed to be a part. A part file (equivalent to the part file 9 in FIG. 1) is provided to manage such parts. In the part file, a correspondence between part names and the corresponding object command names assigned to the parts is established. A real part table (equivalent to the command link table in FIG. 1) is also provided to manage the object command names and the addresses at which the data items corresponding to the object command names are stored. Therefore, in this configuration, a correspondence between data items stored in files 82 and the corresponding object command names assigned to the data items can be established.

When an object command name is specified, the data item to which the object command name is assigned is also specified because each assigned object command name is unique in the system. In the following description, the description on data items may be omitted.

According to this invention, the system is configured so that the command assignment section 85 can also assign an object command to a group of object commands defined by a group of the data items to which the object commands are assigned. In this configuration, for example, the command assignment section 85 can assign object command CEI1 to command group [V1 + P1 + C2] to store command group [V1 + P1 + C2] to which object command C1 specifying multiple processing is assigned in file E· as illustrated in FIG. 20. The command assignment section 85 can also assign object command CEI2 to command group [V2 + P2] to store command group [V2 + P2] to which object command C2 specifying multiple processing is assigned in file E.

Data processing in the information processing unit 80 is performed by transmitting object command names between data processing units. The following description deals with output processing of data from files 82 which stores object commands as described in FIGs. 19 and 20 to I/O devices 81 using FIG. 21.

The user requests the input table processor 83a to output object command C1. The input table processor 83a manages the input mechanism in the I/O table processor 83. Then the input table processor 83a transmits object command CO1 assigned by the command assignment section 85 to file E which manages object command C1 . When file E receives object command CO1, the output table processor 83b starts processing of outputting object command C1. The output table processor 83b manages the output mechanism in the I/O table processor 83. Then the output table processor 83b performs output processing for command group [V1 + P1 + C2] to which object command C1 is assigned. During this output processing, data item OO corresponding to object command V1 is read from file A and is output to a speaker 81a, and data item ◻◻ corresponding to object command P1 is read from file B and is output to a display unit 81b. Then the output table processor 83b reads object command C2 from file E according to the multiple processing specification defined by object command C2 as the next processing.

After reading object command C2, the output table processor 83b starts processing of outputting object command C2. It performs output processing for command group [V2 + P2] to which object command C2 is assigned. During this output processing, data item △△ corresponding to object command V2 is read from file A and is output to the speaker 81a, and data item x x corresponding to object command P2 is read from file B and is output to the display unit 81b.

In this way, the functional database method in the embodiment illustrated in FIG. 17 can be used to assign an object command to a data item. It can also be used to assign an object command to a group of commands as a data item. The combinations of assigned object commands can be multiplexed as required. Object commands in the same file 82 and also in other files 82 can be combined. As seen from the above example, the functional database method enables voice data and image data to be output simultaneously according to the specification of simple object commands. It also enables data to be output continuously from page to page corresponding to animation.

The following is a detailed description of the practical applications of this invention's functional database method. This method enables multimedia information to be viewed efficiently and in an integrated way.

FIG. 22 illustrates a practical application of the method. In FIG. 22, numeral 90 indicates an information processor consisting of the CPU and memory. Numeral 91 indicates an I/O device which supports the following at least: code I/O device (91-1), voice I/O device (91-2), and dot-type I/O device (91-3). Numeral 92 indicates the multimedia file that manages data about the I/O device (91). Numeral 93 indicates the terminal output file that manages sense information output to the I/O device (91). The sense information consists of the file information of the database in the multimedia file (92) and the output format information of the data. The terminal output file manages the information according to the object commands that specify the procedure attributes. Numeral 94 indicates the I/O table processors that support the primary I/O table processor (95) and the secondary I/O table processor (96). The primary I/O table processor stores data output from the I/O device (91) in the multimedia file (92). The secondary I/O table processor sets objects commands for the terminal output file (93). The secondary I/O table processor also outputs sense information to the I/O device (91) according to the object commands in the terminal output file (93). The sense information consists of data related to the multimedia file (92).

The following description deals with operations and processing of the practical application of the configuration illustrated in FIG. 22.

Data is input via the I/O device (91). The primary I/O table processor (95) sorts the input data according to the I/O device type. It stores the data in corresponding files in the multimedia file (92). When the files have been stored, the multimedia file (92) informs the secondary I/O table processor (96) of the file location information indicating the address of the stored data. When the secondary I/O table processor (96) receives the file location information, it outputs the data in the multimedia file (92) to I/O device 11 through interaction via the display unit. The display unit is part of the code data I/O device (91-1). Meanwhile, the secondary I/O table processor (96) determines the output format for the data in the multimedia file (92). The output format specifies, for instance, the combination of data items to be displayed on one screen. This output format is output to the I/O device (91) as another sense information item.

When the output format database is determined, the secondary I/O table processor (96) prepares an object command string. This command string represents the file location and the output format of the data. Then the secondary I/O table processor (96) stores the object command string into the terminal output file (93). Hence, the terminal output file (93) contains an object command string for data items to be output as a one sense information item.

The secondary I/O table processor (96) receives an output request for a database in the terminal output file (93) via the display unit. The display unit is part of code data I/O device (91-1). At this time the secondary I/O table processor (96) reads the requested object command string from the terminal output file (93). It also fetches the file location information specified in the object command string, and fetches the output format information specified in the object command string. According to the fetched file location information, the secondary I/O table processor (96) reads out real data from the multimedia file (92). Then it outputs the real data according to the fetched output format information to the corresponding I/O device (91). Thus, the secondary I/O table processor (96) outputs multimedia information.

As explained above, this invention (the database method) processes information of different media by grouping it into parts. This operation is assisted by the database system that manages data input and output via the I/O device (91) that supports multimedia I/O device. This enables multimedia data to be processed in an integrated way.

FIG. 23 illustrates details of the practical application shown in FIG. 22.

In FIG. 23, code 91a indicates a display unit supporting a keyboard and a pointer such as a mouse. Code 91b indicates a microphone. Code 91c indicates a speaker. Code 91d indicates a facsimile machine. Code 91e indicates a video camera. The display unit (91a) serves as a code I/O device and image data output device for the information processing unit (90). The microphone (91b) serves as a voice data input device for the information processing unit (90). The speaker (91c) serves as a voice data output device for the information processing unit (90). The facsimile machine (91d) serves as a dot-type I/O device for the information processing unit (90). The video camera (91e) serves as an image data input device for the information processing unit (90).

Code 92a indicates the code data file that is a part of the multimedia file (92) and that manages data for the code I/O device. Code 92b indicates the dot data file that is a part of the multimedia file (92) and that manages data for the dot-type I/O device. Code 92c indicates the voice data file that is a part of the multimedia file (92) and that manages data for the voice I/O device. Code 92d indicates the image data file that is a part of the multimedia file (92) and that manages data for the image data I/O device. Code 92e indicates an additional file that is provided, if necessary, for an additional I/O device that processes data in a form other than the above.

Code 95a indicates a multimedia data I/O table processor that corresponds to the primary I/O table processor (95) illustrated in FIG. 23. Code 96a indicates a code data I/O table processor that corresponds to the secondary I/O table processor (96) illustrated in FIG. 23.

As explained above, the terminal output file (93) manages the file location information of the data group in the multimedia file (92). The terminal output file (93) also manages the output format information of the data as a single item of sense information according to object commands. FIG. 24 illustrates the practical application of management data managed by the terminal output file (93).

The terminal output file (93) manages the following file location codes as a single unit of sense information when they are output in synchronization to the I/O device of the corresponding media: code data, "aa" in FIG. 24, the file location code that indicates the file location number of the code data file (92a); dot data, "bb", the file location code of the dot data file (92b); voice data, "cc", the file location code of the voice data file (92c); and image data, "dd", the file location code of the image data file (92d). The file location information specifies the data in the multimedia file (92). The terminal output file (93) manages the output format code that determines the output format of the data. The output format code is called the header of the file location. The output format code specifies the output format as follows: for instance, the position on the screen of the display unit (91a) from where data is displayed, or the volume at which a voice is output to the speaker (91c). The file location code and the output format code consist of an object command.

The following is a detailed description of the operations and processing of the practical application illustrated in FIG. 23. Also see the flowchart in FIG. 25.

A database is created in the terminal output file (93) using the following procedure. Step 11: The multimedia data I/O table processor (95a) reads real data from the I/O device to which the processor is connected. Step 12: The multimedia data I/O table processor (95a) stores the written real data in a file of the corresponding media in the multimedia file (92), according to the storage instruction issued by the user. Step 13: Multimedia file 92 notifies the code data I/O table processor (96a) of the location in which the real data is stored. Step 14: The code data I/O table processor (96a) creates the database to be stored in the terminal output file (93), as requested interactively by the user. The database contains data items that are to be output as a single item of sense information. This can be done by correlating data items stored in the multimedia file (92) and setting the output format for the data items. Step 15: The code data I/O table processor (96a) stores the object command string representing the created database into the terminal output file (93).

The database created in the terminal output file (93) is edited using the following procedure. Step 21: The code data I/O table processor (96a) outputs real data from the multimedia file (92) according to the object command data in the selected terminal output file (93). Step 22: The code data I/O table processor (96a) edits the database as requested interactively by the user. For instance, it copies the screen prepared in Step 11 or 15 and modifies part of the screen. Step 23: The code data I/O table processor (96a) stores the object command string representing the edited database in the terminal output file (93).

The created and edited database in the terminal output file (93) is output using the following procedure. Step 31: The code data I/O table processor (96a) displays a list of databases in the terminal output file (93). Step 32: The code data I/O table processor (96a) selects a database to be output according to the instruction from the user. Step 33: The code data I/O table processor (96a) searches for the file location information specified by the object command of the selected database, reads the corresponding real data from the multimedia file (92), and outputs the real data to the corresponding I/O device according to the output format specified by the object command.

As mentioned in the description of the practical application, this invention (the database method) forms a single-level data management structure consisting of multimedia data. The multimedia information is output together as a single item of sense information according to object commands containing the procedure attributes. In the database, multimedia information is grouped into parts, thereby enabling integrated management.

Hence, the use of the functional database method illustrated in practical applications in FIGs. 22 and 23 enables the integrated processing of multimedia data.

The practical applications of the functional database method of this invention are described in detail below. This database method permits a user having little knowledge of programming to build systems at will.

FIG. 26 illustrates a practical application of this invention. In FIG. 26, numeral 100 indicates an information processing unit consisting of a CPU and memory. Numeral 101 indicates a man-machine interface. Numeral 102 indicates the I/O table processor that controls input and output with the man-machine interface (101). Numeral 103 indicates the screen information file which adds an identification code to the screen information (104) prepared by the user and saves it. Numeral 105 indicates the program file that adds identification codes to the data processing programs (106) related to the screen information (104) and saves them. Numeral 107 is the object data file. The object data file manages the identification code of the screen information (104) and the identification code(s) of one or more data processing program(s) (106) related to the screen information (104) in the coupling format. It is preferable that the object data file, also manages the identification codes of correlating screen information (104) in the coupling format. Numeral 108 indicates the object manager that manages data in the object data file (107). Numeral 109 is the program executor that processes data according to a data processing program (106), which is called by the program file (105).

The practical application of the above configuration illustrated in FIG. 26 is described below.

Screen information (104) prepared by the user is stored in the screen information file (103). The program file (105) contains ready-made data processing programs (106) that group data into parts.

When the user creates screen information (104), the I/O table processor (102) outputs the following, for example to the man-machine interface (101): a list of screen names of screen information (104) in the screen information file (103), and a list of names of data processing programs (106) in the program file (105). The I/O table processor (102) thus accepts items selected by the user by means of the mouse. Through interaction with the user, the I/O table processor (102) assigns identification code(s) to one or more data processing program(s) (106) related to the created screen information (104). (The identification code(s) may be determined according to the screen information (104) area.) It is preferable that the I/O table processor (102) also assigns identification codes to other screen information (104) related to the created screen information (104). The identification codes of data processing programs (106) and information of other screens (104) are registered as being related to the identification code of the created screen information (104) in the object data file (107).

When the I/O table processor (102) receives a request to display specific screen information (104) from the user, it searches the screen information file (103) for the requested screen information (104), and outputs the information to the man-machine interface (101). When the I/O table processor (102) notifies the object manager (108), the object manager refers to the object data file (107) to search for the identification codes of other screen information (104) related to the displayed screen information (104). The the object manager passes the fetched identification codes to the I/O table processor (102). When the I/O table processor receives the identification codes, it searches the screen information file (103) for screen information (104) represented by the notified identification codes. Also, the I/O table processor (102) displays the fetched screen information (104) according to the specified display instruction, such as overlapping with the currently displayed screen information (104) or in the next screen format. If no related screen information (104) is managed by the object data file (107), only the screen information (104) specified by the user is displayed.

While screen information (104) is displayed, the object manager (108) searches the object data file (107) for the identification code of a data processing program (106) related to the displayed screen information (104). Then the object manager (108) posts the fetched identification code of the specified data processing program (106) to the program executor (109). When the program executor (109) receives this code, it searches the program file (105) for the data processing program (106) represented by the posted identification code. It also processes the data according to the fetched data processing program (106), and reports the results of execution to the I/O table processor (102).

In this way, the database method of this invention separates screen information (104) and data processing programs (106), enabling the user to create screen information (104). Also, the database method forms a link between screen information (104) and data processing programs (106), making it possible to call data processing programs (106) using screen information (104). Hence, a user with little programming knowledge can create application screens as required, to create data processing functions at will. For example, the user can create a function that displays a specified alarm on the application screen when data exceeding a specified value is input from a sensor. Furthermore, screen information (104) can be displayed without intervention from a data processing program (106). Therefore the user can alter created application screens without modifying the program.

FIG. 27 illustrates a practical application of management data in the object data file (107), shown in FIG. 26. This object data file (107) manages attributes of the screen information (104) created by the user. The object data file (107) does this by managing the following items, as shown in FIG. 26: the plain I/O information index (code) that indicates the main screen information (104) in the screen information file (103), the plain attribute information index (code) that indicates the related data processing program (106) in the program file (105), the screen information that indicates the position and size for displaying the managed screen information (104) on the screen, and (preferably) another screen number information index (code) that indicates the identification code of other screen information (104) related to the managed screen information (104).

In FIG. 27, the screen information (104) assigned to screen number information index (G01) is represented by the plain I/O information index Cxxx of the screen information file (103). The screen information (104) is related to the data processing program (106) that is represented by the plain attribute information index Sxxx. The screen information (104) is displayed in size scale Yxx at position Zxx on the screen. The screen information (104) is related to the screen information (104) assigned to another screen number information index (G05). Then, the screen information (104) assigned to another screen number information index (G05) is related to the screen information (104) assigned to another screen number information index (G11).

Management data is registered in the object data file (107) as follows: A list of screen names of screen information (104) contained in the screen information file (103) and a list of program names of data processing programs (106) contained in the program file (105) are output to the man-machine interface (101). Then the user selects the screen and program names using the mouse. Otherwise, this selection is made at the level of the area of the currently displayed screen information (104). Part file 9 illustrated in FIG. 1 manages the following: The screen names of the screen information (104), the relationship with the screen number information indexes, the program names of data processing programs (106), and relationship with the plain attribute information indexes.

Displaying the screen information (104) and activating the data processing programs (106) illustrated in FIG. 26 are described in detail below. See also the flowchart in FIG. 28.

Screen information (104) is displayed using the following procedure. Step 1: The name of the screen that the user has requested to be displayed is accented. Step 2: The part file mentioned above is searched to find the screen number information index that corresponds to the accepted screen name. The user can directly specify the screen number information index, in which case, Step 1 is skipped. Step 3: The screen number information index is determined. The object data file (107) is searched to find the screen information and the plain I/O information index assigned to the requested screen number information index. The fetched plain I/O information index is used to search the screen information file (103) for the screen information (104). The read screen information (104) is output to the man-machine interface (101) according to the fetched screen information.

Step 4: The object data file (107) is searched to find the information index of other screens assigned to the screen number information index of the screen information (104) that has been displayed as a result of Step 3. If the information index is found in Step 4, the process advances to Step 5. Step 5: The object data file (107) is searched to find the plain I/O information index and the screen information to be displayed which are represented by the information index of other screens. The screen information (104) represented by the specified plain I/O information index is read from the screen information file (103). The read screen information (104) is output according to the specified screen information, as specified by the user. For instance, the screen information (104) can be overlapped with the currently displayed screen information (104), or it can be displayed in the next screen format. If another information index of other screens is assigned, the processing is reheated and the corresponding screen information (104) is displayed. Selection of the overlapping or the next screen format can be registered in the object data file (107) in advance.

FIG. 29 shows an example of displaying information of other screens in Step 5. In the example, as shown in FIG. 29-A, the screen information (104) of the main screen number information index (G01) is assigned to another screen number information index (G11). The screen information (104) of the number information index (G11) of other screens is assigned to another screen number information index (G12). Furthermore, the screen information (104) of this number information index (G12) is assigned to still another screen number information index (G13). If the user specifies the overlapping display format, screen information (104) is displayed in the multi-window format, as shown in FIG. 29-B.

If it is determined in Step 4 that another screen number information index is not assigned, or when the display process in Step 5 is complete, processing advances to Step 6. Step 6: It is determined whether there is a request to activate a data processing program (106) related to the specified screen information (104) currently displayed. The request is issued when the user selects the screen information (104) being displayed using the mouse, or when the processing data satisfies the activating conditions. When such a request is found in Step 6, the object data file (107) is searched for the plain attribute information index assigned to the screen information (104) associated to the activating request. Then the program file (105) is searched to find the data processing program (106) specified by the fetched plain attribute information index and the program is executed. If more than one plain attribute information index is assigned, that is, more than one data processing program (106) is related, one program is selected through interaction with the user. Alternatively, the programs are executed according to the predetermined priority.

The data processing program (106) which has been activated notifies the the user of the results by entering them in the screen information (104) being displayed.

Thus, the use of the functional data processing method of the practical application illustrated in FIG. 26 separates screen information (104) and data processing programs (106) to enable the user to create screen information (104). Also, the link formed between the screen information (104) and data processing programs (106) makes it possible to call data processing programs (106) using the screen information (104). Hence, a user having little knowledge of programming can create data processing functions as required at will. Furthermore, the screen information (104) can be displayed without the intervention of a data processing program (106). Therefore, changes on the screen can be dealt with without modifying the program.

[Industrial applications]

As explained above, the functional database method in this invention is useful for constructing databases for an information processing unit that processes multimedia data. This applies especially when the information processing unit has a distributed system configuration. The functional data processing method in this invention is useful for efficient data processing using an information processing unit that handles multimedia data, especially when the information processing unit has a distributed system configuration.

## Claims

1. A functional database method characterized by:

   (a) the management of memory which contains the data of the processing system,

   (b) functional files consisting of at least:

      (1) a terminal output file (22) which stores the data group using the command provided for each data item,

      (2) an I/O file (23) used as a buffer,

which receives real data corresponding to the command above to output data from the terminal output file,

(3) a fixed file (25) containing data corresponding to the command above, and containing data which will not be permanently lost after being stored,

(4) a variable file (26) containing real data corresponding to the command above, and containing data whose status varies, and

(5) a part file (27) containing data for setting attributes related to the data to be defined in the above files;

(c) data processing determined by the functional database above and the necessary links between the functional data groups.

2. In a distributed system consisting of multiple terminals connected in a network, a functional data processing method characterized by:

(a) the division of terminal functions used for the distributed system into functional objects consisting of data and the means for processing it,

(b) messages containing formatted commands, to be transmitted between the objects,

(c) the synthesis of a local terminal function and remote terminal functions by transmitting messages between a functional object in a local terminal and the same kind of functional objects in remote terminals, and

(d) the distribution of functions to remote terminals by transmitting messages between a functional object in a local terminal and different kinds of functional objects in remote terminals in the same way as between local terminal functional objects.

3. In the functional data processing method in claim 2, a functional data processing method consisting of:

(a) an output format object (35) which stores data segments of various media data items using commands which are created for the data items to output the data segments to an I/O device,

(b) an I/O object (32) to develop real data based on a command group from the output format object (35) and to input or output data as a buffer to or from an I/O device,

(c) a fixed data object (36) containing data which is permanently stored once it is created, and which comprises data items used in the system and provided with commands,

(d) a variable data object (37) containing types of data comprising data items used in the system and provided with commands, and

(e) a part data object (38) containing data used for detting attributes to define a pattern segment or semantically combined data used in the system.

4. In a distributed information processing unit consisting of multiple terminals connected in a network, a functional database method characterized by the processing of the terminals which:

(a) store fixed data and variable data comprising data items to be transferred to the fixed files (55 and 60) which will not be permanently lost and to the variable files (56 and 61) containing the various types of data,

(b) transfer assigned commands according to the data attribute of the fixed data in the fixed files (55 and 60), and which transfer real variable data in the variable files (56 and 61), when the data to be transferred is transferred from one terminal to another.

5. In the functional data base method in claim 4, a functional data base method using terminals:

(a) consisting a learning part (54) which issues a request to access the real data for the terminal containing the real data when no real data is in the fixed file (55 and 60) of the local terminal,

(b) characterized by acquiring the real data which corresponds to the command transferred due to the access request issued by the learning part (54), and

(c) which store the acquired real data in the fixed files (55 and 60) of the local terminal.

6. In an information processing unit which is given files to manage data and which processes data by operating on data managed by the files, a functional data processing method characterized by:

(a) a configuration for storing data to be stored in the above files according to data type,

(b) a command file (84) managing the definition of the command which specifies the procedure attribute,

(c) a command assignment section assigning commands defined by the command file (84) to:

(1) the data segments of the data stored in the above file according to the data attributes of the data segments, and

(2) a command group specified as data by data items with the above command assigned, if necessary, and

(d) processing data according to the procedure attribute of the command to be assigned.

7. In an information processing unit which manages data output from an I/O device and edits the data and outputs it to the I/O device, a functional database method consisting of:

(a) I/O devices such as a code I/O device, dot-type I/O device, and voice I/O device,

(b) a multimedia file (92) managing data of the above I/O devices according to data types,

(c) a terminal output file (93) managing file location information and output format information of the data group in the multimedia file (92) which is output as information for the I/O devices by the command specifying procedure attributes, and

(d) the I/O table processing device (94) which

(1) stores the data output from the I/O devices to the multimedia file (92),

(2) specifies the above command for the terminal output file (93),

(3) reads the command stored in the terminal output file (93),

(4) reads data from the multimedia file (92) according to the information specified by the file location information of the command,

(5) outputs the data to its corresponding I/O device according to output format information of the command.

8. In an information processing unit which processes data according to the data processing program, a functional data processing method consisting of:

(a) a screen information file (103) containing screen information,

(b) a program file (105) containing teh data processing program which corresponds to the data attributes of the screen information in the above screen information file (103),

(c) an object data file (107) which manages in a pair:

(1) the identification code of the screen information in the screen information file (103), and

(2) one or more identification codes of the data processing program of the program file (105) which corresponds to the screen information, and characterized by:

(d) specifying the data processing program which corresponds to the screen information of the screen information file (103) by referencing the object data file (107) to display the screen information on the screen,

(e) processing data according to the specified data processing program above.

9. In a data processing unit which processes data according to the data processing program, a functional data processing method consisting of:

(a) a screen information file (103) containing storing screen information,

(b) a program file (105) containing the data processing program which corresponds to the data attributes of the screen information in the screen information file (103),

(c) an object data file (107) managing in pairs:

(1) the identification code of the screen information of the screen information file (103), and

(2) one or more identification codes of the data processing program of the program file (105) which corresponds to the screen information, and characterized by:

(d) specifying other screen information related to the screen information in the screen information file (103) by referencing object data file (107) to display the screen information on the screen,

(e) displaying the specified other screen information according to the specified display format,

(f) specifying the data processing program which corresponds to the screen information on the screen by referencing the data file (107), and

(g) processing data according to the specified data processing program.

# Fig.1

EP 0 451 281 A1

# Fig.2

# Fig. 3

```
                    ┌──────────────┐
                    │    Start     │
                    └──────┬───────┘
                           │
                           ▼
        ┌──────────────────────────────────┐
   (a)  │  Write data input from I/O        │
        │  device into I/O file             │
        └──────────────────┬───────────────┘
                           │
                           ▼
        ┌──────────────────────────────────┐
        │  Register real data from I/O      │
        │  file to multimedia according to  │
   (b)  │  registration indication and register │
        │  name, comment and attribute in   │
        │  part file                        │
        └──────────────────┬───────────────┘
                           │
                           ▼
                    ◇─────────────────◇          YES
   (c)         ◇  Pattern part registered?  ◇─────────┐
                    ◇─────────────────◇               │
                           │ NO                        │
                           ▼                           │
        ┌──────────────────────────────────┐          │
        │ For terminal output data registration, │     │
        │ combine codes using two or more   │          │
   (d)  │ pattern parts registered by above │          │
        │ processing and write them in      │          │
        │ terminal output file              │          │
        └──────────────────┬───────────────┘          │
                           │◄──────────────────────────┘
                           ▼
                    ┌──────────────┐
                    │     End      │
                    └──────────────┘
```

24

# Fig.4

Start

(a) | Display registration screen for registering part data of sensor

(b) | Enter sensor data, such as sensor name, comment and attributes

(c) | Store data in part file according to registration indication

(d) | At part file registration, obtain sensor data input location and specify that sensor data is automatically inserted into location

End

# Fig.5

```
        ┌──────────┐
        │  Start   │
        └────┬─────┘
             ▼
```

(a) ┌─────────────────────────────────┐
    │ Enter request of data to be output, │
    │ from display.Data is managed by │
    │ terminal output file │
    └─────────────────────────────────┘

(b) ┌─────────────────────────────────┐
    │ Find necessary data in terminal │
    │ output file and send it to I/O │
    │ file │
    └─────────────────────────────────┘

(c) ┌─────────────────────────────────┐
    │ Transferred data is one to which │
    │ real data of multimedia file was │
    │ encoded.Obtain real data from │
    │ multimedia file according to code │
    └─────────────────────────────────┘

(d) ┌─────────────────────────────────┐
    │ Select and output necessary I/O │
    │ device according to obtained real │
    │ data │
    └─────────────────────────────────┘

```
        ┌──────────┐
        │   End    │
        └──────────┘
```

## Fig.6

## Fig.7

# Fig.8

① 「G10」

② 「C01, V01」

21 CRT

23
```
C01
V01
aaaa
bbb
⑦
```

aaaa
bbb
⑧

22
```
G10 : C01, V01
```

③ C01

④ aaaa

⑤ V01

⑥ bbb

24

25 (C01) aaaa

26 (V01) bbb

24

25

⋮

EP 0 451 281 A1

# Fig.9

# Fig.10

# Fig.11

# Fig.12

# Fig.13

# Fig.14

# Fig.15

A River    78

Mt.A

79

A Dam    Mt.B

# Fig.16

Terminal A    Terminal B

Store fixed data in fixed file and assign command to fixed data (a)

Data (variable data) is generated. Request access to terminal A (b)

(d)

Receive command and variable data (d)    Transmit command and variable data (c)

(e) Translate command to real data

To target real data exists    The target real data does not exist

Access terminal B and perform learning operation (f)    Transmit requested real data corresponding to command (g)

Store received real data in fixed file (h)

Create output data using fixed data and variable data (i)

Output data to display it (j)

# Fig.17

## Fig.18

| Command name | Procedure attribute |
|---|---|
| I | |
| O | |
| C | |
| VAI | |
| PBI | |
| VAOS | |
| PBOD | |
| ⋮ | ⋮ |

~84

## Fig.20

84

85

83

82

File E

$C1 + [V1 + P1 + C2] \longrightarrow$  CEI1$[V1 + P1 + C2] \longrightarrow$  C1$[V1 + P1 + C2]$

$C2 + [V2 + P2] \longrightarrow$  CEI2$[V2 + P2] \longrightarrow$  C2$[V2 + P2]$

# Fig.19

# Fig.21

# Fig.22

# Fig.23

# Fig.24

| Code data | | Dot data | | Voice data | | Image data | |
|---|---|---|---|---|---|---|---|
| Output format code | "aa" | Output format code | "bb" | Output format code | "cc" | Output format code | "dd" |

# Fig.25

```
                              ┌─────────┐
                              │  Start  │
                              └────┬────┘
   Create                          │              Output
   data base                       ▼              data base
                            ┌──────────────┐
         ┌──────────────────│ Select work? │──────────────────┐
         │                  └──────┬───────┘                   │
         │                         │ Edit data base            │
         ▼ ST11                    ▼ ST21                      ▼ ST31
   ┌──────────────┐         ┌──────────────┐           ┌──────────────────┐
   │ Read         │         │ Output       │           │ Display          │
   │ real data    │         │ real data    │           │ data base list   │
   └──────┬───────┘         └──────┬───────┘           └────────┬─────────┘
          ▼ ST12                   ▼ ST22                        ▼ ST32
   ┌──────────────┐         ┌──────────────┐           ┌──────────────────┐
   │ Store        │         │ Edit         │           │ Select           │
   │ real data    │         │ data base    │           │ data base        │
   └──────┬───────┘         └──────┬───────┘           └────────┬─────────┘
          ▼ ST13                   ▼ ST23                        ▼ ST33
   ┌──────────────────┐     ┌──────────────┐           ┌──────────────────┐
   │ Notify real data │     │ Store        │           │ Display          │
   │ storage location │     │ data base    │           │ real data        │
   └──────┬───────────┘     └──────┬───────┘           └────────┬─────────┘
          ▼ ST14                   ▼                            ▼
   ┌──────────────┐           ┌─────────┐                 ┌─────────┐
   │ Create       │           │   End   │                 │   End   │
   │ data base    │           └─────────┘                 └─────────┘
   └──────┬───────┘
          ▼ ST15
   ┌──────────────┐
   │ Store        │
   │ data base    │
   └──────┬───────┘
          ▼
     ┌─────────┐
     │   End   │
     └─────────┘
```

# Fig.26

# Fig. 27

| Screen number information index | I/O plain information index | Attribute plain information index | · · · · · · · · · · Address | Display screen information | | Other screen number information index |
|---|---|---|---|---|---|---|
| | | | | Size | | |
| GO1 | CXXX | SXXX | · · · · · · · · · · | YXX | ZXX | GO5 |
| ⋮ | ⋮ | ⋮ | · · · · · · · · · | ⋮ | ⋮ | ⋮ |
| GO5 | COOO | SOOO | · · · · · · · · · · | YOO | ZOO | G11 |
| ⋮ | ⋮ | ⋮ | · · · · · · · · · | ⋮ | ⋮ | ⋮ |

# Fig. 29A

GO1 : · · · · ·, G11

G11 : · · · · ·, G12

G12 : · · · · ·, G13

# Fig. 29B

GO1

G11  G12  G13

# Fig.28

```
        ( Start )
            │
            ▼
┌─────────────────────┐   ST1
│ Accept name of screen│
│ to be displayed      │
└─────────────────────┘
            │
            ▼
┌─────────────────────┐   ST2
│ Search part file for screen│
│ number information index │
└─────────────────────┘
            │
            ▼
┌─────────────────────┐   ST3
│ Search object data file for│
│ display screen information │
│ and plain I/O information │
│ index.Display requested │
│ screen information │
└─────────────────────┘
            │
  ST4       ▼      Other screen number
                  information found?
         ◇──────────── NO ───────────┐
         │                           │
        YES        ST5               │         ST6
         │          ╱                │          ╱
┌─────────────────────┐      NO    ◇ Request to activate
│ Display related other screen│◀──── data processing
│ information according to │      program?
│ specified display mode │                │
└─────────────────────┘                  YES        ST7
         │                                │          ╱
         │                    ┌─────────────────────┐
         │                    │ Search object data file for│
         │                    │ plain attribute information │
         │                    │ index.Activate assigned data│
         │                    │ processing program │
         │                    └─────────────────────┘
         │                                │
         ▼◀───────────────────────────────┘
      ( End )
```

# INTERNATIONAL SEARCH REPORT

International Application No PCT/JP90/01159

## I. CLASSIFICATION OF SUBJECT MATTER (if several classification symbols apply, indicate all) 6

According to International Patent Classification (IPC) or to both National Classification and IPC

Int. Cl$^5$ G06F12/00

## II. FIELDS SEARCHED

### Minimum Documentation Searched 7

| Classification System | Classification Symbols |
|---|---|
| IPC | G06F12/00 |

### Documentation Searched other than Minimum Documentation to the Extent that such Documents are Included in the Fields Searched 8

| | |
|---|---|
| Jitsuyo Shinan Koho | 1971 – 1989 |
| Kokai Jitsuyo Shinan Koho | 1971 – 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| T | Joho Shori Gakkai Data Base System Kenkyukai, Vol. 78, 20 July 1990 (20. 07. 90), Tadamitsu Ryu and another "Proposal of file structure in a distribution system", p. 81-91 | 1 – 9 |
| A | Joho Shori, vol. 28, No. 6, June 1987 (Tokyo), Yoshifumi Masunaga "Outline of a multimedia database" | 1, 2, 4, 6, 7, 8, 9 |
| A | Joho Shori, Vol. 30, No. 5, May 1989 (Tokyo) Ken Sakamura "Conception and future of TRON" | 1 – 9 |
| A | Joho Shori, Vol. 30, No. 5, May 1989 (Tokyo) Yoshiaki Kushiki, Masahiro Shimizu "Evaluation and realization of BTRON standard supporting human interface" p. 544-552 | 1, 6, 7, 8, 9 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 26, 1990 (26. 11. 90) | December 10, 1990 (10. 12. 90) |

| International Searching Authority | Signature of Authorized Officer |
|---|---|
| Japanese Patent Office | |

Form PCT ISA/210 (second sheet) (January 1985)

**FURTHER INFORMATION CONTINUED FROM THE SECOND SHEET**

| A | Communications of ACM, Vol. 31, No. 7, (1988), R. M. AKSCYN, et al "KMS : A Distributed Hypermedia System for Managing Knowledge in Organizations", p. 820-835 | 1, 2, 6, 7 |
|---|---|---|

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers , because they relate to subject matter not required to be searched by this Authority, namely:

2.☐ Claim numbers , because they relate to parts of the international application that do not comply with the prescribed requirements to such an extent that no meaningful international search can be carried out, specifically:

3.☐ Claim numbers , because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)